# EUROPÄISCHE PATENTSCHRIFT

(11) **EP 2 099 851 B1**
(45) Veröffentlichungstag und Bekanntmachung des Hinweises auf die Patenterteilung: **01.02.2012**
(21) Anmeldenummer: 07821961.5
(22) Anmeldetag: 29.10.2007
(51) Int. Cl.: C08J 9/00

(54) **WÄSSRIGE KALTWEICHSCHAUMSTABILISATORFORMULIERUNGEN FÜR DIE HERSTELLUNG VON HOCHELASTISCHEN POLYURETHANKALTWEICHSCHÄUMEN ODER VON KALTWEICHSCHAUMAKTIVATORLÖSUNGEN**
AQUEOUS COLD FLEXIBLE FOAM STABILIZER FORMULATIONS FOR THE PRODUCTION OF HIGHLY ELASTIC POLYURETHANE COLD FLEXIBLE FOAMS OR COLD FLEXIBLE FOAM ACTIVATOR SOLUTIONS
FORMULATIONS AQUEUSES DE STABILISATEUR DE MOUSSE MOLLE À FROID POUR LA FABRICATION DE MOUSSES MOLLES DE POLYURÉTHANE À FROID À HAUTE ÉLASTICITÉ OU DE SOLUTIONS D'ACTIVATEUR DE MOUSSE MOLLE À FROID

(30) Priorität: 15.12.2006 US 639615
(43) Veröffentlichungstag der Anmeldung: 16.09.2009
(73) Patentinhaber: Evonik Goldschmidt GmbH, 45127 Essen (DE)
(72) Erfinder: GLOS, Martin, 46325 Borken (DE); BUNTING, William, Chester, Virginia 23831 (US); MODRO, Harald, 45968 Gladbeck (DE); VIDAKOVIC, Mladen, 47269 Duisburg (DE)
(86) Internationale Anmeldenummer: PCT/EP2007/061603
(87) Internationale Veröffentlichungsnummer: WO 2008/071497

(56) Entgegenhaltungen:
- DE-C1- 3 626 297
- US-A- 4 751 251
- US-A- 4 769 174
- US-A- 5 192 812

## Beschreibung

Gegenstand der vorliegenden Erfindung sind wässrige Kaltweichschaumstabilisatorformulierungen zur Verwendung bei der Herstellung von hochelastischen Polyurethankaltweichschäumen oder zur Verwendung bei der Herstellung von Kaltweichschaumaktivatorlösungen für hochelastische Polyurethankaltschäume und deren Verwendung. Weitere Gegenstände der vorliegenden Erfindung sind Kaltweichschaumaktivatorlösungen auf Basis der wässrigen Kaltweichschaumstabilisatorformulierungen sowie hochelastische Polyurethankaltschäume erhältlich unter Verwendung der wässrigen Kaltweichschaumstabilisatorformulierungen und/oder Kaltweichschaumaktivatorlösungen.

Polyurethankaltweichschäume werden auch als "Kaltschäume" bzw. "high-resilience-foams (HR-Schäume)" bezeichnet.

Hochelastische Polyurethankaltschäume finden vielfältige Verwendung zur Herstellung von Matratzen, Polstermöbeln oder Autositzen. Ihre Herstellung erfolgt durch Umsetzung von Isocyanaten mit Polyolen. Schaumstabilisatoren dienen bei der Herstellung von Polyurethankaltweichschäumen zur Stabilisierung des expandierenden Schaums. Sie sorgen dafür, dass eine regelmäßige Zellstruktur entsteht und auch keine Störungen im Unterhautbereich auftreten.

Zur Herstellung der Polyurethankaltweichschäume werden üblicherweise Polyether, Vernetzer und Polyisocyanate sowie übliche Hilfsstoffe, wie Katalysatoren, Stabilisatoren, Treibmittel und dergleichen eingesetzt. Gemeinsam ist all diesen Verfahren, dass durch ein frühzeitiges Vernetzen des Polyurethanschaumstoffes das System eine hohe Eigenstabilität aufweist.

Daher kann oder muss in vielen Fällen auf die Verwendung eines Polysiloxan-Polyether-Copolymeren, als ein den Schaum gegen Rückfall stabilisierendes Zusatzmittel, verzichtet werden, da diese - bei der Herstellung von so genannten "Heißschäumen" unverzichtbaren Schaumstabilisatoren - bei "Kaltschäumen" zu einer nicht tolerierbaren Schrumpfneigung führen.

Es gibt eine Vielzahl von Herstellungsverfahren von hochelastischen Polyurethanweichschäumen, die in der Literatur eingehend beschrieben werden. So werden in der Offenlegungsschrift DE-A-25 33 074, auf die im vollen Umfang Bezug genommen wird, bereits eine Vielzahl von Literaturstellen angegeben, die die großtechnische Herstellung von Polyurethanweichschäumen beschreiben.

Ferner wird die Herstellung von Polyurethanweichschäumen in Becker/Braun, Kunststoff-Handbuch, Band 7 (Herausgeber: G. Oertel), Polyurethane, Carl Hanser Verlag, München; Wien, 2. Auflage 1983 beschrieben, worauf im vollen Umfang Bezug genommen wird.

Stabilisatoren, wie Siloxane, werden meist nicht als Reinsubstanzen verwendet, sondern als Komponente in eine entsprechende Formulierung eingearbeitet, um die Dosierbarkeit oder die Einarbeitbarkeit in die Reaktionsmatrix zu verbessern. Zur Lösung der Siloxane werden für solche Formulierungen verschiedene organische Substanzen als "Lösungsmittel" verwendet. In der Offenlegungsschrift DE-A-2 356 443 werden für die Herstellung von aralkylmodifizierte Siloxanöle enthaltende Formulierungen eine Vielzahl von organischen Lösungsmitteln beschrieben.

Organische Lösungsmittel bringen aber eine Reihe von Nachteilen, wie eine problematische toxikologische Einstufung, eine zu hohe Brennbarkeit der Formulierung und/oder eine nicht gewünschte Emission organischer Lösemittelreste des resultierenden Schaums, mit sich. Ferner können die organischen Lösungsmittel die Eigenschaften des Polyurethankaltweichschaums, wie Porenstruktur, Elastizität und dergleichen, nachteilig beeinflussen.

Die Verwendung von Wasser gegenüber organischen Lösungsmitteln hat den Vorteil, dass Wasser nahezu unbegrenzt verfügbar, nicht toxisch und nicht entflammbar ist. Ferner lässt sich Wasser leicht reinigen und ohne technischen Aufwand entsorgen. Ein weiterer Vorteil ist, dass die Sicherheitsbestimmungen für die Lagerung von Wasser vernachlässigbar gering sind. Insgesamt gesehen lassen sich durch die Verwendung von Wasser als Lösungsmittel der Aufwand und dadurch bedingt die Herstellungskosten der erfindungsgemäßen Kaltweichschaumstabilisatorformulierung gegenüber nicht wässrigen Systemen deutlich senken.

Aufgabe der vorliegenden Erfindung ist es, wasserunlösliche Polysiloxanverbindungen enthaltende Kaltweichschaumstabilisatorformulierungen sowie Kaltweichschaumaktivatorlösungen zur Verfügung zu stellen, die zumindest einen der vorstehenden Nachteile vermeiden.

Die Aufgabe der vorliegenden Erfindung wird gelöst durch eine wässrige Kaltweichschaumstabilisatorformulierung zur Verwendung bei der Herstellung von hochelastischen Polyurethankaltweichschäumen oder zur Verwendung bei der Herstellung von Kaltweichschaumaktivatorlösungen für hochelastische Polyurethankaltschäume, wobei die wässrige Kaltweichschaumstabilisatorformulierung die nachstehenden Komponenten umfasst:
a) ≥ 0,1 bis ≤ 80 Gew.-% wenigstens einer wasserunlöslichen Polysiloxanverbindung mit einem Molekulargewicht von wenigstens ≥ 300 g/mol und ≤ 10.000 g/mol,
b) ≥ 2 Gew.-% Wasser,
c) ≥ 0,1 Gew.-% Tensid,
d) ≥ 0 bis 10 Gew.-% Zusätze, ausgewählt aus der Gruppe umfassend Verdicker, Frostschutzmittel, organische Lösungsmittel und/oder Biozide,
e) ≥ 0 Gew.-% wasserlösliche/s Siloxan/e,
wobei der Gewichtsanteil der vorgenannten Komponenten so gewählt ist, dass der Gesamtgewichtsanteil der Komponenten maximal 100 Gew.-%, bezogen auf die wässrige Kaltweichschaumstabilisatorformulierung, ausmacht.

Die erfindungsgemäße Kaltweichschaumstabilisatorformulierung kann ≥ 0,2 bis ≤ 70 Gew.-%, vorzugsweise ≥ 0,5 bis ≤ 60 Gew.-%, weiter bevorzugt ≥ 1 bis ≤ 50 Gew.-%, noch bevorzugt ≥ 2 bis ≤ 40 Gew.-% und außerdem bevorzugt ≥ 3 bis ≤ 30 Gew.-% wenigstens einer wasserunlöslichen Polysiloxanverbindung enthalten.

Die erfindungsgemäße Kaltweichschaumstabilisatorformulierung kann ≥ 5 bis ≤ 99 Gew.-%, vorzugsweise ≥ 10 bis ≤ 97 Gew.-%, weiter bevorzugt ≥ 15 bis ≤ 95 Gew.-%, noch bevorzugt ≥ 20 bis ≤ 92 Gew.-% und außerdem bevorzugt ≥ 40 bis ≤ 90 Gew.-% Wasser enthalten.

Die erfindungsgemäße Kaltweichschaumstabilisatorformulierung kann ≥ 0,1 bis ≤ 99 Gew.-%, vorzugsweise ≥ 0,2 bis ≤ 90 Gew.-%, weiter bevorzugt ≥ 0,3 bis ≤ 40 Gew.-%, noch bevorzugt ≥ 0,8 bis ≤ 15 Gew.-% und außerdem bevorzugt ≥ 1 bis ≤ 10 Gew.-% Tensid enthalten. Das Tensid kann insbesondere wasserlöslich sein.

Die erfindungsgemäße Kaltweichschaumstabilisatorformulierung kann ≥ 0,5 bis ≤ 9 Gew.-%, vorzugsweise ≥ 1 bis ≤ 8 Gew.-%, weiter bevorzugt ≥ 2 bis ≤ 7 Gew.-%, noch bevorzugt ≥ 3 bis ≤ 6 Gew.-% und außerdem bevorzugt ≥ 4 bis ≤ 5 Ges.-% Zusätze, ausgewählt aus der Gruppe umfassend Verdicker, Frostschutzmittel, organische Lösungsmittel und/oder Biozide enthalten.

Die erfindungsgemäße Kaltweichschaumstabilisatorformulierung kann ≥ 0,2 bis ≤ 70 Gew.-%, vorzugsweise ≥ 0,5 bis ≤ 60 Gew.-%, weiter bevorzugt ≥ 1 bis ≤ 50 Gew.-%, noch bevorzugt ≥ 2 bis ≤ 40 Gew.-% und außerdem bevorzugt ≥ 3 bis ≤ 30 Gew.-% wasserlösliche/s Siloxan/e enthalten, wobei das/die wasserlösliche/n Siloxan/e vorzugsweise mit maximal dem doppelten Gewichtsanteil, bezogen auf die wasserunlösliche Polysiloxanverbindung, in der wässrigen Kaltweichschaumstabilisatorformulierung enthalten ist.

Der Gewichtsanteil der vorgenannten Komponenten, wenn nicht ausdrücklich anders angegeben, ist so gewählt, dass der Gesamtgewichtsanteil der Komponenten maximal 100 Gew.-%, bezogen auf die wässrige Kaltweichschaumstabilisatorformulierung, ausmacht.

Wenn nicht anders angegeben können die jeweiligen Komponenten einzeln oder als Gemisch vorliegen. Es ist sogar bevorzugt, dass die wasserunlösliche Polysiloxanverbindung als Gemisch vorliegt.

Die erfindungsgemäß verwendbaren Verbindungen, umfassend wasserunlösliche Polysiloxanverbindungen, Tenside, Zusätze, wasserlösliche Siloxane sowie gegebenenfalls weitere Additive, sind jeweils unterschiedlich voneinander und umfassen sich nicht gegenseitig. So umfasst beispielsweise das Tensid keine wasserunlöslichen Polysiloxanverbindungen sowie wasserlösliches Siloxan und umgekehrt. Ferner umfassen beispielsweise die Zusätze keine Tenside; wasserunlösliche Polysiloxanverbindungen sowie wasserlösliches Siloxan und umgekehrt.

Das Gewicht der wasserunlöslichen und wasserlöslichen Siloxane in der Kaltweichschaumstabilisatorformulierung kann (in Summe) ≥ 0,2 bis ≤ 70 Gew.-%, vorzugsweise ≥ 0,5 bis ≤ 60 Gew.-%, weiter bevorzugt ≥ 1 bis ≤ 50 Gew.-%, noch bevorzugt ≥ 2 bis ≤ 40 Gew.-% und außerdem bevorzugt ≥ 3 bis ≤ 30 Gew.-% betragen, bezogen auf das Gesamtgewicht der erfindungsgemäßen Kaltweichschaumstabilisatorformulierung.

Wenn der Wassergehalt der Formulierung im Bereich von 60 bis 98 Gew.-% liegt, kann der Quotient gebildet aus dem Massenanteil der wasserlöslichen Siloxane durch den Massenanteil der wasserunlöslichen Siloxane in der Formulierung im Bereich von 0 bis 5 liegen. In den meisten Fällen kann der Quotient ≤ 4, ≤ 2 oder auch ≤ 1 sein.

Die erfindungsgemäße Kaltweichschaumstabilisatorlösung kann ≥ 1 wasserlösliche Siloxane enthalten kann aber auch frei von wasserlöslichen Siloxanen sein. Für den Fall, dass die erfindungsgemäße Kaltweichschaumstabilisatorlösung wasserlösliche Siloxane enthält, kann es bevorzugt sein, dass das wasserlösliche Siloxan maximal mit dem doppelten Gewichtsanteil, bezogen auf die wasserunlösliche Polysiloxanverbindung, in der wässrigen Kaltweichschaumstabilisatorformulierung enthalten ist.

Es kann ferner erfindungsgemäß bevorzugt sein, dass der Quotient (Q) gebildet aus dem Massenanteil der eingesetzten Tenside durch den Massenanteil der wasserunlöslichen Siloxane in der erfindungsgemäßen Kaltweichschaumstabilisatorlösung 0 < Q ≤ 1, insbesondere Q ≤ 0,5, noch bevorzugter Q ≤ 0,2 oder sogar Q ≤ 0,15, ist.

Besonders bevorzugt ist, wenn der Wassergehalt der erfindungsgemäßen Kaltweichschaumstabilisatorlösung im Bereich von ≥ 60 bis ≤ 98 Gew.-% ausmacht und/oder der Quotient gebildet aus dem Massenanteil der eingesetzten Tenside durch den Massenanteil der wasserunlöslichen Siloxane in der Formulierung 0 < Q ≤ 1, insbesondere Q ≤ 0,5, noch bevorzugter Q ≤ 0,2 oder sogar Q ≤ 0,15, ist.

Es wurde gefunden, dass ein zu hoher Tensidanteil für den Verschäumungsprozess nachteilig sein kann. Beispielsweise kann die Schaumstruktur gestört werden. Ferner können Tenside im Schaum zu unerwünschten Emissionen oder anderen Nebeneffekten führen.

Weiterhin ist es eine Aufgabe der vorliegenden Erfindung eine Kaltweichschaumstabilisatorlösung zur Verfügung zu stellen, die einen möglichst hohen Anteil an Wasser und Siloxan aufweist, da diese beiden Komponenten für die Verschäumung benötigt werden. Der Anteil an Substanzen, wie Tenside, die für die Verschäumung nicht notwendig sind, wird daher erfindungsgemäß möglichst auf ein Minimum reduziert.

Eine weitere bevorzugte erfindungsgemäße Kaltweichschaumstabilisatorlösung umfasst die nachstehenden Komponenten:
a) 0,1 bis 80 Gew.-% wenigstens einer wasserunlöslichen Polysiloxanverbindung mit einem Molekulargewicht von ≤ 10.000 g/mol und mit der nachstehenden allgemeinen Formel I: 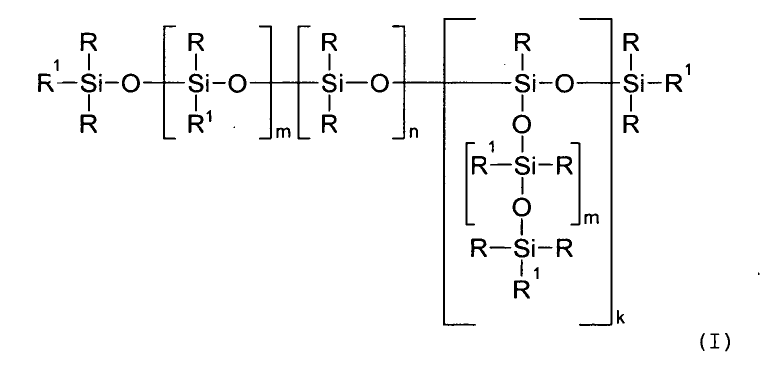 worin
   - R: gleich oder verschieden voneinander, ein linearer, verzweigter, ungesättigter oder gesättigter Kohlenwasserstoffrest mit 1 bis 50 C-Atomen,
   - R¹: R, OH, gleich oder verschieden voneinander, ein linearer, verzweigter, ungesättigter oder gesättigter Koh- lenwasserstoffrest mit 1 bis 100 C-Atomen enthaltend wenigstens ein Heteroatom ausgewählt aus der Gruppe N, S, O, P, F, Cl, Br und/oder I,
   - n: ≥ 0 bis 50,
   - m ≥: 0 bis 50,
   - k: ≥ 0 bis 10,
b) 2 bis 99 Gew.-% Wasser,
c) 0,1 bis 90 Gew.-% Tensid,
d) ≥ 0 bis 10 Gew.-% Zusätze, ausgewählt aus der Gruppe umfassend Verdicker, Frostschutzmittel, organische Lösungsmittel und/oder Biozide,
e) ≥ 0 bis 80 Gew.-% wasserlösliche/s Siloxan/e,
sind, mit der Bedingung, dass n + m ≥ 2 und n + m ≤ 70 ist, wobei der Gewichtsanteil der vorgenannten Komponenten so gewählt ist, dass der Gesamtgewichtsanteil der Komponenten, bezogen auf das Gesamtgewicht der wässrigen Kaltweichschaumstabilisatorformulierung, maximal 100 Gew.-% ausmacht.

Ferner ist eine wässrige Kaltweichschaumstabilisatorformulierung bevorzugt, die wenigstens eine wasserunlösliche Polysiloxanverbindung gemäß der allgemeinen Formel I enthält, worin
- R: gleich oder verschieden voneinander, Alkyl- oder Arylrest, vorzugsweise Methyl, Ethyl oder Propyl und bevorzugt Methyl,
- n: 1 bis 50, vorzugsweise 3 bis 40 und besonders bevorzugt 5 bis 25,
- m: ≥ 1 bis 20, vorzugsweise 2 bis 15 und besonders bevorzugt 3 bis 10,
- k: ≥ 1 bis 10, vorzugsweise 2 bis 8 und besonders bevorzugt 3 bis 6,
sind.

Weiterhin ist eine wässrige Kaltweichschaumstabilisatorformulierung bevorzugt, die wenigstens eine wasserunlösliche Polysiloxanverbindung gemäß der allgemeinen Formel I enthält, worin wenigstens ein R¹ eine Seitenkette ist, gemäß der Formel II: 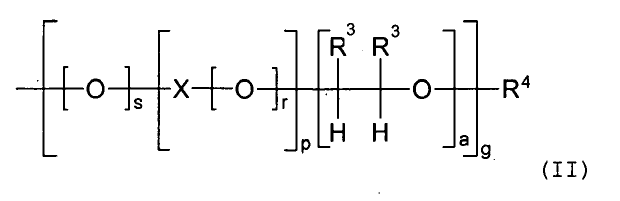 worin
- R³: gleich oder verschieden voneinander H, Methyl, Ethyl, Propyl oder Phenyl,
- R⁴: gleich oder verschieden voneinander H, Alkyl-, Acyl-, Acetyl-, Arylrest, vorzugsweise ein einwertiger oder zweiwertiger Kohlenwasserstoffrest mit 1 bis 30 C-Atomen und bevorzugt ein einwertiger (g = 1) oder zweiwertiger (g = 2) Kohlenwasserstoffrest mit 1 bis 30 C-Atomen mit wenigstens einem Heteroatom ausgewählt aus der Gruppe N, S, O, P, F, Cl, Br und/oder I, wobei bei g = 2 zwei Verbindungen der allgemeinen Formel (I) durch den Rest der Formel (II) verknüpft werden,
- X: ein gesättigter-, ungesättigter-, verzweigter-, cylischer-, difunktioneller Kohlenwasserstoff mit 1 bis 30 C-Atomen, der auch Heteroatome wie N oder O enthalten kann,
- a: ≥ 0 bis ≤ 30, vorzugsweise 1 bis 25 und bevorzugt 2 bis 20,
- g: 1 oder 2,
- p: 0 oder 1,
- r: 0 oder 1,
- s =: 0 oder 1,
sind.

Gemäß einer weiteren bevorzugten Ausführungsform der vorliegenden Erfindung weist die erfindungsgemäß verwendbare wasserunlösliche Polysiloxanverbindung die nachstehende Formel III auf: 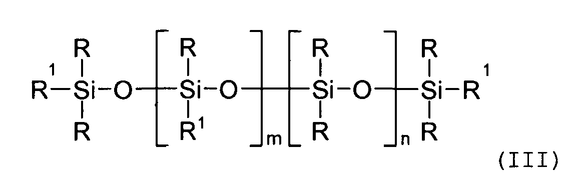 worin
- R: gleich oder verschieden voneinander Methyl oder Ethyl,
- R¹: R, OH, gleich oder verschieden voneinander Hydroxy-, Amino-, Chlor- oder Cyano-Gruppen enthaltende Alkylreste, vorzugsweise Hydroxyalkyl, Aminoalkyl, Chlorpropyl oder Cyanopropyl,
- n: ≥u 2 bis 30, bevorzugt 3 bis 25 und bsonders bevorzugt 4 bis 25,
- m: ≥ 0 bis ≤ 5,
sind.

Für den Fachmann ist es offensichtlich, dass die erfindungsgemäß verwendbaren wasserunlöslichen Polysiloxanverbindungen in Form eines Gemisches vorliegen, dessen Verteilung im Wesentlichen durch statistische Gesetzte bestimmt werden. Die verschiedenen Struktureinheiten in den vorstehenden Formeln I, II und III können statistisch oder blockweise angeordnet sein. Die Werte für a, g, n, m, k, p, r, und/oder s entsprechen daher Mittelwerten.

Die erfindungsgemäß verwendbaren wasserunlöslichen Polysiloxanverbindungen sind für die Herstellung von Polyurethankaltweichschäumen geeignet.

Bei der Herstellung von Polyurethanweichschäumen unterscheidet man je nach Reaktivität der Rohstoffe Polyurethanheißweichschäume (im folgenden Heißschäume) und Polyurethankaltweichschäume (im folgenden Kaltschäume), wobei sich die Begriffe von der Formverschäumung ableiten. So ist es bei der Herstellung von Heißschäumen nach dem Formverfahren aufgrund der geringen Reaktivität der Rohstoffe notwendig, den Schaum in der Form bei erhöhter Temperatur, beispielsweise von ≥ 90° C, zur vollständigen Vernetzung auszuheizen; diese Schäume werden deshalb als Heißschäume bezeichnet.

Die Entwicklung hochreaktiver Polyetherpolyole und gegebenenfalls die zusätzliche Verwendung von Vernetzern ermöglichen es hingegen, die Herstellung des Schaums in der Form aufgrund der raschen Aushärtung bei geringerer Wärmezufuhr durchzuführen. Derartige Schäume werden deshalb Kaltschäume genannt.

Neben der Formverschäumung ist es dabei auch möglich, die Verschäumung nach dem Blockverfahren durchzuführen, wofür sich die Begriffe Kalt- bzw. Heißschaum ebenfalls eingebürgert haben.

Aufgrund der verschiedenen Rohstoffe weisen Kaltschäume ganz typische physikalische Eigenschaften auf, die sie von Heißschäumen unterscheiden.

Die Kaltschäume besitzen:
(a) einen latexartigen Griff,
(b) eine gegenüber den konventionellen Heißschäumen erhöhte Elastizität, weshalb diese Schäume auch als "high-resilience-foams" (HR-Schäume) bezeichnet werden,
(c) eine vom Heißschaum unterschiedliche Stauchhärte-Charakteristik (höherer SAG-Faktor) und weisen damit bei Verwendung als Polstermaterial einen besseren Sitzkomfort auf (Möbelschaum),
(d) gute Dauergebrauchseigenschaften mit nur geringer Ermüdungstendenz, was insbesondere im Automobilbereich von großem Interesse ist,
(e) aufgrund ihres Schmelzverhaltens eine bessere Flammwidrigkeit als konventionelle Heißschäume,
(f) günstigere Energiebilanz und kürzere Standzeiten bei der Formverschäumung.

Ein weiteres wesentliches Merkmal der Kaltschäume ist die Rückprallelastizität "ball rebound". Ein Verfahren zur Ermittlung der Rückprallelastizität ist beispielsweise in der ISO 8307 beschrieben. Hierbei wird eine Stahlkugel mit festgelegter Masse aus einer bestimmten Höhe auf den Probenkörper fallen gelassen und dann die Höhe des Rückpralls in Prozent der Abwurfhöhe gemessen. Typische Werte für einen Kaltweichschaum liegen im Bereich von über 55 %. Demgegenüber weisen Heißschäume oder Polyurethanesterschäume, nachfolgend auch Esterschäume genannt, nur Rückprall-Werte von maximal 30 bis 48 % auf.

Zur Herstellung eines Polyurethankaltweichschaums wird ein Gemisch aus Polyol, polyfunktionellem Isocyanat, Aminaktivator, Zinn, Zink oder andere geeignete metallhaltige Katalysatoren, Stabilisatoren, Treibmittel, üblicherweise Wasser zur Bildung von CO₂ und gegebenenfalls einem Zusatz von physikalischen Treibmitteln, gegebenenfalls unter Zugabe von weiteren Zusätzen, wie Flammschutzmitteln, Farbpasten, Füllstoffen, Vernetzern oder sonstigen üblichen Verarbeitungshilfsmitteln, umgesetzt.

Der entscheidende Unterschied zum Heißschaum besteht bei der Kaltweichschaumherstellung darin, dass zum einen hochreaktive Polyole und optional auch niedermolekulare Vernetzer eingesetzt werden, wobei die Funktion des Vernetzers auch durch höherfunktionelle Isocyanate übernommen werden kann. Somit kommt es bereits in der Expansionsphase (CO₂-Bildung aus -NCO und H₂O) des Schaums zu der Reaktion der Isocyanatgruppen mit den Hydroxylgruppen. Diese schnelle Polyurethanreaktion führt über den Viskositätsanstieg zu einer relativ hohen Eigenstabilität des Schaums während des Treibvorgangs.

Bei Polyurethankaltweichschäumen handelt es sich folglich um hochelastische Schäume, bei denen die Randzonenstabilisierung eine große Rolle spielt. Aufgrund der hohen Eigenstabilität sind die Zellen am Ende des Schäumvorgangs oft nicht genügend geöffnet und es muss noch mechanisch aufgedrückt werden. Hierbei gibt die notwendige Aufdrückkraft ein Maß für die Offenzelligkeit. Wünschenswert sind Schäume mit hoher Offenzelligkeit, die lediglich geringe Aufdruckkräfte benötigen. Bei der Formverschäumung werden Polyurethankaltweichschäume im Gegensatz zu Polyurethanheißweichschäumen bei einer Temperatur von beispielsweise ≤ 90° C, hergestellt.

Bei den Weichschäumen unterscheidet man neben Polyurethankaltweichschäumen und Polyurethanheißweichschäumen noch Polyurethanesterschäume.

Bei Polyurethanesterschäumen handelt es sich um Schäume mit einer sehr regelmäßigen Zellstruktur. Eine unregelmäßige Struktur (sog. Schwammstruktur) kann man durch eine gezielte Schaumstörung erhalten. Polyurethanesterschäume sind durch die Umsetzung von Diisocyanaten mit Hydroxylgruppen enthaltenden Polyestern, beispielsweise gebildet durch Umsetzung von Dicarboxylsäuren und Polyhydroxyalkoholen, erhältlich. Substanzen, die sich für eine gezielte Schaumstörung eignen, sind beispielsweise Polydimentylsiloxanverbindungen mit einem Molekulargewicht von ≥ 40.000. Solche für die Schaumstörung verwendbaren Polysiloxanverbindungen weisen häufig eine Viskosität von mindestens 4.000 mPas oder höher auf.

Die erfindungsgemäß verwendbaren wasserunlöslichen Polysiloxanverbindungen sind weder für die Herstellung von Polyurethanheißschäumen noch für die Herstellung von Polyurethanesterschäumen geeignet. Sowohl in Polyurethanheißschäumen als auch in Esterschäumen würden die erfindungsgemäß verwendbaren, wasserunlöslichen Polysiloxanverbindungen zu sehr starken Störungen im Schaum oder sogar zum völligen Kollaps des Schaums führen.

Im Sinne dieser Erfindung werden unter dem Begriff "wasserunlösliche Polysiloxanverbindungen" Polysiloxanverbindungen verstanden, die sich bis maximal 5 g in 100 ml bidestilliertem Wasser bei 23° C in einem 250 ml Becherglas mittels eines teflonbeschichteten Rührstäbchens (3 cm Länge) bei einer Rührerdrehzahl von 200 U/min über einen Zeitraum von 1 Stunde homogen einrühren lassen, ohne dass sich, nach stehen lassen der Mischung über einen Zeitraum von mindestens 100 Tagen, eine Phasentrennung ausbildet.

Im Sinne dieser Erfindung werden unter dem Begriff "wasserlösliche Polysiloxanverbindungen" Polysiloxanverbindungen verstanden, die sich mit > 5 g in 100 ml bidestilliertem Wasser bei 23° C in einem 250 ml Becherglas mittels eines teflonbeschichteten Rührstäbchens (3 cm Länge) bei einer Rührerdrehzahl von 200 U/min über einen Zeitraum von 1 Stunde homogen einrühren lassen, ohne dass sich, nach stehen lassen der Mischung über einen Zeitraum von mindestens 100 Tagen, eine Phasentrennung ausbildet.

Die erfindungsgemäße Kaltweichschaumstabilisatorformulierung kann maximal 10 Gew.-% organisches Lösungsmittel enthalten. Das organische Lösungsmittel kann ausgewählt sein aus der Gruppe umfassend Frostschutzmittel, vorzugsweise kurzkettige Alkohole und/oder Glykole, vorzugsweise Ethylenglykol, Propylenglykol, Diethylenglykol, Dipropylenglykol.

Besonders bevorzugt sind Kaltweichschaumstabilisatorformulierungen, die keine organischen Lösungsmittel aufweisen.

Die erfindungsgemäß als Stabilisatoren wasserunlösliche Polysiloxane enthaltende Kaltweichschaumstabilisatorformulierung und/oder Kaltweichschaumaktivatorlösung weist vorteilhafte Eigenschaften zur Kontrolle der Zellgröße und Zellgrößenverteilung sowie Randzonenregulierung auf.

Bei der Blockverschäumung von Polyurethankaltweichschäumen ist neben der Schaumstabilisierung und Regulierung der Zellgrößenverteilung die notwendige Zellöffnung zum richtigen Zeitpunkt und im richtigen Ausmaß das eigentliche Problem. Erfolgt die Zellöffnung zu früh oder zu spät kann der Schaum kollabieren oder schrumpfen. Ist ein Schaum nicht genügend offenzellig kann das mechanische Aufdrücken Probleme bereiten.

Bei der Herstellung eines Polyurethankaltweichformschaumkörpers treten zusätzliche Anforderungen auf, da das expandierende Reaktionsgemisch, um das ganze Formvolumen auszufüllen, relativ weite Fließwege überwinden muss. Hier kann es an den Formwänden oder an eingebrachten Einlegeteilen leicht zu einer Zerstörung ganzer Zellverbände kommen, so dass unter der Schaumhaut Hohlräume entstehen. Eine weitere kritische Zone befindet sich im Bereich der Entlüftungsöffnungen. Strömt überschüssiges Treibgas mit zu hoher Geschwindigkeit an den Zellverbänden vorbei, führt dies zu partiell kollabierten Zonen.

In vorteilhafter Weise weist die erfindungsgemäße Kaltweichschaumstabilisatorformulierung und/oder Kaltweichschaumaktivatorlösung die nachstehenden Vorteile auf:
- ausreichende Stabilisierung des Schaums,
- Stabilisierung gegenüber den Einflüssen von Scherkräften,
- Stabilisierung der Randzone und der Haut,
- Kontrolle der Zellgröße und der Zellgrößenverteilung sowie die Vermeidung einer erhöhten Geschlossenzelligkeit.

Erfindungsgemäß bevorzugt sind wasserunlösliche Polysiloxane, die ein Molekulargewicht von 300 bis 4.000 g/mol, vorzugsweise von 350 bis 3.500 g/mol und bevorzugt von 400 bis 3.000 g/mol aufweisen.

Weiterhin hat sich gezeigt, dass die Ausbildung einer regelmäßigen Porenstruktur, eine gute Randzonenstabilität und geringe Aufdruckkräfte für Polyurethankaltweichschäume erhalten werden kann, wenn die Molmasse der Polyethereinheiten nicht zu groß wird.

Ferner nimmt mit zunehmender Molmasse der Polyethereinheiten die Wasserlöslichkeit der Polysiloxanverbindungen zu, die zu einer Verschlechterung der vorgenannten Produkteigenschaften führen kann. Es ist deshalb bevorzugt, wenn die Polyethereinheiten der erfindungsgemäßen wasserunlöslichen Polysiloxanverbindung eine Molmasse von 44 bis 1.000 g/mol, vorzugsweise 58 bis 750 g/mol und bevorzugt 88 bis 500 g/mol aufweisen.

Ferner kann die erfindungsgemäße Kaltweichschaumstabilisatorformulierung gegebenenfalls auch wasserlösliche Siloxane aufweisen. Wasserlösliche Siloxane können, müssen aber nicht in der erfindungsgemäßen Kaltweichschaumstabilisatorformulierung enthalten sein, um die gewünschten Effekte bei der Kaltweichschaum-Verschäumung zu erhalten.

Erfindungsgemäß bevorzugt mitverwendete wasserunlösliche Polysiloxanverbindungen weisen je Polysiloxan-Molekül maximal 70 Si-Atome, bevorzugt maximal 50, besonders bevorzugt 5 bis 25 auf, wobei Polydimethylsiloxane mit 5 bis 25 Si-Atomen im Molekül am meisten bevorzugt sind.

Die erfindungsgemäß geeigneten Polydimethylsiloxane weisen eine geringe Viskosität auf. Es hat sich herausgestellt, dass Polydimethylsiloxane mit einer Viskosität von > 200 mPas die Ausbildung einer möglichst regelmäßigen Zellstruktur nachteilig stören. Insbesondere Viskositäten von > 500 mPas oder darüber führen zu einer ungewünschten unregelmäßigen schwammartigen Zellstruktur oder sogar zum Kollaps des Schaums. Gemäß der vorliegenden Erfindung sind deshalb Polydimethylsiloxane der allgemeinen Formel (III), in denen alle Reste R, R¹ = Methylreste sind und m = 0 ist, bevorzugt, die eine Viskosität von ≥ 0 bis ≤ 100 mPas, vorzugweise ≥ 0,5 bis ≤ 80 mPas, bevorzugt ≥ 1 bis ≤ 70 mPas und besonders bevorzugt ≥ 1,5 mPas bis ≤ 50 mPas, haben.

Die Viskosität, wenn in der Beschreibung der vorliegenden Erfindung nicht anders angegeben, wurde nach DIN 53015 bei 20° C mit einem Kugelfallviskosimeter nach Höppler gemessen.

Das Verfahren beruht auf der Messung der Zeitspanne, die eine Kugel benötigt, um eine durch Ringmarken gekennzeichnete Strecke in einem um 10° geneigten, mit der zu messenden Flüssigkeit gefüllten zylindrischen Rohr mit einem Innendurchmesser von 15,94 mm unter Einwirkung der Schwerkraft zurückzulegen. Hierbei werden je nach zu messendem Viskositätsbereich Kugeln mit festgelegter Dichte und festgelegtem Durchmesser eingesetzt.

Eine bevorzugte Ausführungsform der vorliegenden Erfindung umfasst eine wässrige Kaltweichschaumstabilisatorformulierung enthaltend:
a) ≥ 0,1 bis ≤ 80 Gew.-%, vorzugsweise ≥ 0,2 bis ≤ 60 Gew.-% und bevorzugt 0,3 bis ≤ 50 Gew.-% wasserunlösliches Polysiloxan, wobei ein wasserunlösliches Polysiloxan von 0,5 bis ≤ 40 Gew.-% besonders bevorzugt ist,
b) ≥ 5 bis ≤ 99 Gew.-%, vorzugsweise ≥ 10 bis ≤ 95 Gew.-% und bevorzugt ≥ 30 bis ≤ 90 Gew.-% Wasser und
c) ≥ 0,1 bis ≤ 99 Gew.-%, vorzugweise ≥ 0,2 bis ≤ 90 Gew.-% und bevorzugt ≥ 0,3 bis ≤ 40 Gew.-% Tensid,
d) ≥ 0 bis 10 Gew.-% und bevorzugt 0,1 bis 5 Gew.-% Zusätze,
e) ≥ 0 bis ≤ 80 Gew.-%, vorzugsweise ≥ 0 bis ≤ 60 Gew.-% und bevorzugt 0 bis ≤ 50 Gew.-% wasserlösliche/s Siloxan/e, wobei der Gewichtsanteil der vorgenannten Komponenten so gewählt ist, dass der Gesamtgewichtsanteil der Komponenten, bezogen auf das Gesamtgewicht der wässrigen Kaltweichschaumstabilisatorformulierung, maximal 100 Gew.-% ausmacht.

Eine weitere bevorzugte Ausführungsform der vorliegenden Erfindung umfasst eine wässrige Kaltweichschaumstabilisatorformulierung enthaltend:
a) ≥ 0,5 bis ≤ 35 Gew.-%, vorzugsweise ≥ 1 bis ≤ 30 Gew.-% und bevorzugt 3 bis ≤ 25 Gew.-% wasserunlösliches Polysiloxan,
b) ≥ 5 bis ≤ 99 Gew.-%, vorzugsweise ≥ 20 bis ≤ 95 Gew.-% und bevorzugt ≥ 40 bis ≤ 90 Gew.-% Wasser und
c) ≥ 0,2 bis ≤ 20 Gew.-%, vorzugsweise ≥ 0,3 bis ≤ 15 Gew.-% und bevorzugt 0,5 bis ≤ 10 Gew.-% Tensid,
d) ≥ 0 bis 10 Gew.-% und bevorzugt 0,1 bis 5 Gew.-% Zusätze,
e) ≥ 0 bis ≤ 30 Gew.-%, vorzugweise ≥ 0 bis ≤ 25 Gew.-% und bevorzugt 0 bis ≤ 20 Gew.-% wasserlösliche/s Siloxan/e, wobei
der Gewichtsanteil der vorgenannten Komponenten so gewählt ist, dass der Gesamtgewichtsanteil der Komponenten, bezogen auf das Gesamtgewicht der wässrigen Kaltweichschaumstabilisatorformulierung, maximal 100 Gew.-% ausmacht.

Die erfindungsgemäßen Kaltweichschaumstabilisatorformulierungen enthalten Tenside, die nachstehend auch als "Emulgatoren" bezeichnet werden.

Tenside, die in der wässrigen Kaltweichschaumstabilisatorformulierung eingesetzt werden, können ausgewählt sein aus der Gruppe umfassend anionische Tenside, kationische Tenside, nichtionische Tenside und/oder amphotere Tenside, wobei das Tensid besonders bevorzugt ein wasserlösliches nichtionisches Tensid (Niotensid), ist.

Bei den erfindungsgemäßen Kaltweichschaumstabilisatorformulierungen hat sich gezeigt, dass Kaltweichschaumstabilisatorformulierungen die als Emulgatoren ionische Tenside und insbesondere Aniontenside enthalten, Aufrahmungen der Formulierung beobachtet werden können. Es wurde nunmehr gefunden, dass man eine Aufrahmung der erfindungsgemäßen Kaltweichschaumstabilisatorformulierung verhindern kann, wenn man der Kaltweichschaumstabilisatorformulierung als Emulgatoren ausschließlich oder zumindest überwiegend Niotenside zusetzt. Insbesondere kann man eine Aufrahmung der erfindungsgemäßen Kaltweichschaumstabilisatorformulierung durch den Zusatz eines Tensidgemisches mit ≥ 90 Gew.-% Niotensid und/oder ≤ 10 Gew.-% anionisches Tensid verhindern.

Erfindungsgemäß ist es daher besonders bevorzugt Kaltweichschaumstabilisatorformulierungen zu verwenden, die als Emulgatoren mindestens 90 Gew.-% Niotenside und maximal 10 Gew.-% ionische Tenside, wie Aniontenside, kationische Tenside und/oder Betaine enthalten.

Als Tenside können erfindungsgemäß auch polymere Emulgatoren, wie Polyalkylpolyoxyalkylpolyacrylate, Polyvinylpyrrolidone oder Polyvinylacetate verwendet werden.

Eine Übersicht der verwendbaren Tenside befindet sich in Ullmann's Encyclopedia of Industrial Chemistry, fifth, completely revised edition, volume A9, page 297 ff and volume A25, page 747 ff; Stache, Tensid-Taschenbuch, 2. neubearbeitete und erweiterte Ausgabe, 1981, die hiermit als Referenz eingeführt werden und als Teil der Offenbarung der vorliegenden Erfindung gelten.

Geeignete anionische Tenside, die als Emulgatoren für die Kaltweichschaumstabilisatorformulierung mitverwendet werden können, werden z.B. ausgewählt aus der Gruppe umfassend Alkylsulfate, Fettalkoholsulfate, sekundäre Alkylsulfate, Paraffinsulfonate, Alkylethersulfate, Alkylpolyglykolethersulfate, Fettalkolholethersulfate, Alkylbenzolsulfonate, Alkylphenolethersulfate, Alkylphosphate, Phosphorsäure-mono-, di-, tri-Ester, Alkyletherphosphate, Ethoxylierte Fettalkoholphosphorsäureester, Phosphonsäureester, Sulfobernsteinsäurediester, Sulfobernsteinsäuremonoester, ethoxylierte Sulfobernsteinsäuremonoester, Sulfosuccinamide, α-Olefinsulfonate, Alkylcarboxylate, Alkylethercarboxylate, Alkylpolyglykolcarboxylate, Fettsäureisethionat, Fettsäuremethyltaurid, Fettsäuresarkosid, Arylsulfonate, Naphtalinsulfonate, Alkylglycerylethersulfonate, Polyacrylate und/oder α-Sulfofettsäureester.

Geeignete kationische Tenside, die als Emulgatoren für die Kaltweichschaumstabilisatorformulierung mitverwendet werden können, umfassen z.B. aliphatische, cycloaliphatische oder aromatische primäre, sekundäre und tertiäre Ammoniumsalze bzw. Alkanolammoniumsalze, quartäre Ammoniumverbindungen, Pyridiniumsalze, Oxazoliumsalze, Thiazoliumsalze, Salze von Aminoxiden, Sulfoniumsalze, Chinoliniumsalze, Isochinoliniumsalze, Tropyliumsalze. Vorzugsweise ist das quartäre Ammoniumtensid ein Mono-C₆-C₁₆-, vorzugsweise -C₆-C₁₀-N-alkyl-oder -alkenylammoniumtensid, worin die verbleibenden N-Positionen durch Methyl-, Hydroxy-ethyl- oder Hydroxypropylgruppen oder Polyethergruppen (auf der Basis von Ethylenoxid und/oder Propylenoxid) substituiert sind. Das kationische Tensid kann besonders bevorzugt ausgewählt sein aus der Gruppe umfassend Esterquats, vorzugsweise Di-(talgfettsäureamidoethyl)methylpolyethoxyammoniummethosulfat, Diamidoaminquats, Alkyloxyalkylquats, vorzusgweise Cocopentaethoxymethylammoniummethosulfat und/oder Trialkylquats, vorzusgweise Cetyltrimethylammoniumchlorid.

Geeignete verwendbare amphotere Tenside umfassen die Aminoxide, Aminocarbonsäuren, Imidazolincarboxylate und Betaine.

Geeignete Aminoxide umfassen jene Verbindungen mit der Formel R³(OR⁴)ₓN0(R⁵)2, worin R³ aus einer Alkyl-, Hydroxyalkyl-, Acylamidopropyl- und Alkylphenylgruppe oder Mischungen davon mit 8 bis 26 Kohlenstoffatomen ausgewählt ist; R⁴ eine Alkylen- oder Hydroxyalkylengruppe mit 2 bis 3 Kohlenstoffatomen oder Mischungen davon ist; x von 0 bis 5, vorzugsweise von 0 bis 3 ist und jedes R⁵ eine Alkyl- oder Hydroxyalkylgruppe mit 1 bis 3 oder eine Polyethylenoxidgruppe mit 1 bis 3 Ethylenoxidgruppen ist. Bevorzugt sind C₁₀-C₁₈-Alkyldimethylaminoxid und C₁₀-C₁₈-Acylamidoalkyldimethylaminoxid.

Weitere geeignete amphotere Tenside können weitgehend als Derivate sekundärer und tertiärer Amine, Derivate heterocyclischer sekundärer und tertiärer Amine oder Derivate quartärer Ammonium-, quartärer Phosphonium- oder tertiärer Sulfoniumverbindungen beschrieben werden. Betain und Sultaintenside sind bevorzugte amphotere Tenside.

Geeignete Betaine sind jene Verbindungen mit der Formel R(R')₂N⁺R²COO-, worin R eine C₆-C₁₈-Hydrocarbylgruppe, jedes R' in der Regel C₁-C₃-Alkyl und R² eine C₁-C₅-Hydrocarbylgruppe, ist. Bevorzugte Betaine sind C₁₂-₁₈-Dimethylammoniohexanoat und die C₁₀₋₁₈-Acylamidopropan(oder -ethan)-dimethyl(oder -diethyl) betaine. Komplexe Betaintenside sind ebenfalls erfindungsgemäß geeignet.

Das amphotere Tensid kann besonders bevorzugt ausgewählt sein aus der Gruppe umfassend Amphoacetate, Amphodiacetate, Glycinate, Amphopropionate, Sultaine, Aminoxide und/oder Betaine.

Als Niotenside sind im Wesentlichen alle alkoxylierten nichtionischen Tenside geeignet. Die ethoxylierten und propoxylierten nichtionischen Tenside sind bevorzugt.

Bevorzugte alkoxylierte Tenside können aus den Klassen der nichtionischen Kondensate von Alkylphenolen, nichtionischen ethoxylierten Alkoholen, nichtionischen ethoxylierten/propoxylierten Fettalkoholen, nichtionischen Ethoxylat/Propoxylatkondensaten mit Propylenglycol und den nichtionischen Ethoxylatkondensationsprodukten mit Propylenoxid/Ethylendiaminadditionsprodukten ausgewählt werden.

Die Kondensationsprodukte von aliphatischen Alkoholen mit 1 bis 25 mol Alkylenoxid, besonders Ethylenoxid und/oder Propylenoxid, sind ebenfalls erfindungsgemäß verwendbar. Die Alkylkette des aliphatischen Alkohols kann entweder gerade oder verzweigt, primär oder sekundär sein und enthält generell 1 bis 35 Kohlenstoffatome. Besonders bevorzugt sind die Kondensationsprodukte von Alkoholen, die eine Alkylgruppe mit 6 bis 22 Kohlenstoffatomen besitzen, mit 2 bis 200 mol Ethylenoxid pro mol Alkohol.

Polyhydroxyfettsäureamide, die geeignet sind, sind diejenigen mit der Strukturformel R²CONR¹Z, worin: R¹ H, C₁-C₄-Hydrocarbyl, 2-Hydroxyethyl, 2-Hydroxypropyl, Ethoxy, Propoxy oder eine Mischung davon ist, vorzugsweise C₁-C₄-Alkyl, mehr bevorzugt C₁-oder C₂-Alkyl, am meisten bevorzugt C₁-Alkyl (d. h. Methyl) und R² ein C₅-C₃₁-Hydrocarbyl ist, vorzugsweise ein geradkettiges C₅-C₁₉-Alkyl oder -Alkenyl, mehr bevorzugt ein geradkettiges C₉-C₁₇-Alkyl oder -Alkenyl, am meisten bevorzugt ein geradkettiges C₁₁-C₁₇-Alkyl oder -Alkenyl, oder eine Mischung davon und Z ein Polyhydroxyhydrocarbyl mit einer linearen Hydrocarbylkette, bei der mindestens 3 Hydroxylgruppen direkt an die Kette gebunden sind, oder ein alkoxyliertes Derivat (vorzugsweise ethoxyliert oder propoxyliert) davon, ist. Z wird vorzugsweise in einer reduktiven Aminierung von einem reduzierenden Zucker abgeleitet; mehr bevorzugt ist Z ein Glycityl.

Geeignete Fettsäureamidtenside umfassen diejenigen mit der Formel: R⁶CON(R⁷)₂ wobei R⁶ eine Alkylgruppe mit 7 bis 21, bevorzugt 9 bis 17 Kohlenstoffatomen und jedes R⁷ aus der Gruppe bestehend aus Wasserstoff, C₁-C₄-Alkyl, C₁-C₄-Hydroxyalkyl und -(C₂H₄O)ₓH ausgewählt ist, wobei x im Bereich von 1 bis 3 liegt.

Geeignete Alkylpolysaccharide zum diesbezüglichen Gebrauch sind im US-Patent 4 565 647 offenbart, mit einer hydrophoben Gruppe, die 6 bis 30 Kohlenstoffatome enthält und einer hydrophilen Polysaccharid-, z. B. einer Polyglycosidgruppe, die 1,3 bis 10 Saccharideinheiten enthält.

Bevorzugte Alkylpolyglycoside haben die Formel: R²O (CₙH₂ₙO) t(glycosyl)x worin R² ausgewählt ist aus der Gruppe, bestehend aus Alkyl, Alkylphenyl, Hydroxyalkyl, Hydroxyalkylphenyl und Mischungen davon, in denen die Alkylgruppen 10 bis 18 Kohlenstoffatome enthalten; n 2 oder 3 ist; t 0 bis 10 und x 1,3 bis 8 ist. Das Glycosyl ist vorzugsweise von Glucose abgeleitet.

Das nichtionische Tensid kann vorzugsweise ausgewählt sein aus der Gruppe umfassend Alkoholethoxylate, Fettalkoholpolyglykolether, Fettsäureethoxylate, Fettsäurepolyglykolester, Glyceridmonoalkoxylate, Alkanolamide, Fettsäurealkylolamide, ethoxylierte Alkanolamide, Fettsäurealkylolamido-ethoxylate, Imidazoline, Ethylenoxid-Propylenoxid-Blockcopolymere, Alkylphenolethoxylate, Alkylglucoside, ethoxylierte Sorbitanester und/oder Aminalkoxylate.

Beispiele für besonders bevorzugte nichtionische Tenside sind Anlagerungsprodukte von Ethylenoxid, Propylenoxid, Styroloxid, wie in der DE-A-19 940 797 und DE-A-10 029 648 beschrieben oder Butylenoxid an Verbindungen mit azidem Wasserstoff, wie Fettalkohole, Alkylphenole oder Alkohole der Oxosynthese. Der HLB-Wert der Tenside ist so auszuwählen, dass er in dem Bereich liegt, in dem die Bildung der O/W-Emulsion begünstigt wird. Beispiele sind Anlagerungsprodukte von 2 bis 200 mol Ethylenoxid und/oder Propylenoxid an lineare oder verzweigte Fettalkohole mit 1 bis 35 C-Atomen, an Fettsäuren mit 6 bis 30 C-Atomen und an Alkylphenole mit 4 bis 35 C-Atomen in der Alkylgruppe; C₆-C₃₀-Fettsäuremono- und -diester von Anlagerungsprodukten von 1 bis 200 mol Ethylenoxid oder Propylenoxid an Glycerin; Glycerinmono- und -diester und Sorbitanmono-, di- und -triester von gesättigten und ungesättigten Fettsäuren mit 6 bis 22 Kohlenstoffatomen und deren Ethylenoxid oder Propylenoxidanlagerungsprodukte, sowie die entsprechenden Polyglycerin basierenden Verbindungen; Alkylmono- und -oligoglycoside mit 8 bis 22 Kohlenstoffatomen im Alkylrest und deren ethoxylierte oder propoxylierte Analoga; Anlagerungsprodukte von 2 bis 200 mol Ethylenoxid oder Propylenoxid an Ricinusöl und/oder gehärtetes Ricinusöl; Polyol- und insbesondere Polyglycerinester, wie Polyglycerinpolyricinoleat, Polyglycerin-12-hydroxystearat oder Polyglycerindimerat.

Ebenfalls geeignet sind Gemische von Verbindungen aus mehreren dieser Substanzklassen; Partialester auf Basis linearer, verzweigter, ungesättigter bzw. gesättigter C₆-C₂₂-Fettsäuren, Ricinolsäure sowie 12-Hydroxystearinsäure und Glycerin, Polyglycerin, Pentaerythrit, Dipentaerythrit, Zuckeralkohole (beispielsweise Sorbit), Alkylglucoside (beispielsweise Methylglucosid, Butylglucosid, Laurylglucosid) sowie Polyglucoside (beispielsweise Cellulose); Wollwachsalkohole, beziehungsweise entsprechende Derivate, Mischester aus Pentaerythrit, Fettsäuren, Citronensäure und Fettalkohol und/oder Mischester von Fettsäuren mit 6 bis 22 Kohlenstoffatomen, Methylglucose und Polyolen, vorzugsweise Glycerin oder Polyglycerin sowie Polyalkylenglycole.

Es können auch Amin-Alkoxylate verwendet werden wie Kokosamin-Ethoxylate, Stearylamin-Ethoxylate oder Behenylamin-Ethoxylate. Ebenso möglich ist auch die Verwendung von Esterölen, Säureamiden und Mineralölen als nichtionische Komponente der Formulierung, wie Isotridecyl-isononanoat, PEG-4-diheptanoat, Isostearyl-neopentanoat, Cetyloctanoat, Cetylpalmitat, Cetylricinoleat, Cetylmyristat, Cetylacetat, Octylpalmitat, PPG-3-Myristylether, Ethylhexylstearat, Isododecanol, Ölsäurediethanolamid, Cocosfettsäurediethanolamid, 1-Hydroxyethyl-2-heptadecenyl-imidazolin, Paraffinöl, Petroleum.

Bevorzugt einsetzbar sind insbesondere wasserlösliche siloxanhaltige Emulgatoren, beispielsweise wasserlösliche Polyethersiloxane, wasserlösliche Polysiloxan-Polyalkyl-Polyether-Copolymere mit Molmassen von 400 bis 1.000 g/mol, im Handel von der Goldschmidt GmbH erhältlich unter den Marken Tegopren^{®} 5878, Tegopren^{®} 5840, Tegopren^{®} 5847. Diese vorgenannten wasserlöslichen Siloxane haben keinen oder praktisch keinen Einfluss auf die Verschäumung beim Kaltschaum.

Weitere besonders bevorzugt erfindungsgemäß geeignete verwendbare Tenside bzw. Emulgatoren sind auf Styroloxid basierenden Emulgatoren, wie in der DE-A-19 940 797 und DE-A-10 029 648 beschrieben, auf die hier in vollem Umfang Bezug genommen wird.

Als erfindungsgemäß verwendbare Frostschutzmittel können Salze, wie NaCl, CaCl₂, Kaliumacetat oder Kaliumformiat oder auch kurzkettige Alkohole oder Glykole, wie Isopropanol, Butyldiglykol, Ethylenglykol, Diethylenglykol, Dipropylenglykol oder Propylenglykol sowie Harnstoff oder Gycerin eingesetzt werden.

Als Verdicker können die nach dem Stand der Technik bekannten Verbindungen eingesetzt werden, wie Polyacrylat-basierende Verbindungen, vorzugsweise Carbomere, Carbopole oder Zelluloseether, vorzugsweise Tylose^{®}-Typen erhältlich bei Shinetsu, Polyurethan-basierende Verbindungen, wie Viscoplus^{®}-Typen erhältlich bei Goldschmidt GmbH.

Als Biozide können handelsübliche Produkte verwendet werden, wie Chlorophen, Benzisothiazolinon, Hexahydro-1,3,5-tris(hydroxyethyl-s-triazin), Chlor-methyl-isothiazolinon, Methyl-isothiazolinon oder 1,6-Dihydroxy-2,5-dioxohexan, die unter den Handelsnamen BIT 10, Nipacide BCP, Acticide MBS, Nipacide BK, Nipacide CI, Nipacide FC bekannt sind.

Die Viskosität der Kaltweichschaumstabilisatorformulierung liegt im Bereich von 20 mPas bis 10.000 mPas, gemessen bei 20° C nach Höppler.
Die wässrige Kaltweichschaumstabilisatorformulierung gemäß der vorliegenden Erfindung kann auch als Emulsion bezeichnet werden.

Liegt die Formulierung als Emulsion vor, sieht die Größenverteilung der vorliegenden Öltröpfchen so aus, dass über 90 Vol.-% der Öltröpfchen kleiner als 2 µm bzw. kleiner als 1 µm oder kleiner als 0,5 µm sind. Die Größenverteilung wurde mit einem Partikelgrößenmessgerät der Firma Beckman Coulter Modell "LS 230" nach dem Prinzip der Laserbeugung gemessen.

Für die Herstellung der Kaltweichschaumstabilisatorformulierung können die dem Fachmann bekannten Verfahren zur Herstellung von Emulsionen, wie Pastenverfahren, Homogenisierung mittels Hochdruckhomogenisator, Rühr-Verfahren etc. verwendet werden, wie auch in der DE-A-30 24 870 beschrieben, auf die hier in vollem Umfang Bezug genommen wird.

Die wässrige Kaltweichschaumstabilisatorformulierung zeichnet sich durch eine sehr gute Stabilität aus. So ist die erfindungsgemäße Kaltweichschaumstabilisatorformulierung bei Raumtemperatur lagerstabil und bildet beispielsweise über einen Zeitraum von mindestens 10 Tagen, vorzugsweise von mindestens 50 Tagen und bevorzugt von mindestens 100 Tagen keine Phasentrennung aus und/oder es tritt makroskopisch keine Inhomogenität der wässrigen Kaltweichschaumstabilisatorformulierung auf.

Ein besonderer Vorteil der erfindungsgemäßen wässrigen Kaltweichschaumstabilisatorformulierung besteht darin, dass sich diese in eine Aktivatorlösung einarbeiten lässt, wobei man eine lagerstabile, homogene Aktivatorlösung erhält. Mit bekannten Stabilisatoren auf Basis von wasserunlöslichen Siloxanen, wie Tegostab^{®} B 4113 LF, erhältlich bei der Firma Goldschmidt, lassen sich jedoch keine homogenen Aktivatorlösungen herstellen.

Oftmals werden alle Bestandteile außer den Polyolen und Isocyanaten vor dem Verschäumen zur Aktivatorlösung vermischt. Diese enthält dann u.a. die Stabilisatoren (Siloxane), die Katalysatoren, wie Amine, Metallkatalysatoren und das Treibmittel, beispielsweise Wasser, sowie eventuell weitere Additive, wie Flammschutz, Farbe, Biozide etc., je nach Rezeptur des Schaums.

Als Aminaktivatoren bzw. Katalysatoren werden bevorzugt tertiäre Amine, wie das überwiegend vernetzende, d.h. die Reaktion zwischen Isocyanat und Polyol katalysierende Triethylendiamin (TEDA) oder der überwiegend treibende, d.h. die Reaktion zwischen Isocyanat und Wasser katalysierende Bis(2-dimethylaminoethyl)ether (BDE) eingesetzt. Viele Rezepturen beruhen auf einer Kombinationskatalyse dieser beiden Verbindungen. Es können aber auch andere Amine erfindungsgemäß verwendet werden. Die Einsatzmenge der Aminaktivatoren bzw. Katalysatoren kann vorzugsweise zwischen 0,05 und 0,5 Teilen, bezogen auf 100,0 Teile Polyol ausmachen.

Überraschenderweise wurde nunmehr gefunden, dass sich eine homogene Aktivatorlösung ohne zusätzlichen Aufwand leicht herstellen lässt, wenn man die erfindungsgemäße Kaltweichschaumstabilisatorformulierung mit einer Zusammensetzung mischt, enthaltend:
- Katalysatoren, vorzugsweise Amine, Metallkatalysatoren,
- Treibmittel, vorzugsweise Aceton, Methylenchlorid,
- zusätzliches Wasser,
- gegebenenfalls Flammschutzmittel, UV-Stabilisatoren, Farbstoffe, Biozide, Pigmente, Zellöffner, Vernetzer, andere schaumstabilisierende Substanzen und übliche Zusatzstoffe.

Die erfindungsgemäße homogene Kaltweichschaumaktivatorlösung zeichnet sich durch eine gute Lagerstabilität aus. Eine erfindungsgemäße homogene Kaltweichschaumaktivatorlösung kann bei Raumtemperatur über einen Zeitraum von mindestens 10 Tagen, vorzugsweise 50, besonders bevorzugt 100 Tage lagern und stabil sein, d.h. es tritt keine Phasentrennung auf und/oder es tritt makroskopisch keine Inhomogenität der Kaltweichschaumaktivatorlösung auf.

Ohne auf eine bestimmte Theorie festgelegt zu sein, wird die gute Stabilität der Kaltweichschaumaktivatorlösung durch den Gehalt der Tenside erreicht. Insbesondere der Einsatz von Niotensiden, vorzugsweise mind. 90 Gew.-%, bezogen auf das Tensidgesamtgewicht, führt zur Bildung einer homogenen Kaltweichschaumaktivatorlösung ohne dass an der Oberfläche der Kaltweichschaumaktivatorlösung eine Aufrahmung auftritt.

Eine bevorzugte erfindungsgemäße homogene Kaltweichschaumaktivatorlösung, die zur Verwendung bei der Herstellung von hochelastischen Polyurethankaltweichschäumen geeignet ist, enthält eine erfindungsgemäße wässrige Kaltweichschaumstabilisatorformulierung und Additive ausgewählt aus der Gruppe umfassend:
- Katalysatoren, vorzugsweise Amine, Metallkatalysatoren,
- Treibmittel, vorzugsweise Aceton, Methylenchlorid,
- zusätzliches Wasser,
   sowie gegebenenfalls Zusätze ausgewählt aus der Gruppe umfassend Flammschutzmittel, UV-Stabilisatoren, Farbstoffe, Biozide, Pigmente, Zellöffner, Vernetzer, andere schaumstabilisierende Substanzen und übliche Verarbeitungshilfsmittel.

Eine bevorzugte Ausführungsform der Erfindung betrifft eine homogene Kaltweichschaumaktivatorlösung zur Verwendung bei der Herstellung von hochelastischen Polyurethankaltweichschäumen, enthaltend:
- ≥ 2 bis ≤ 25 Gew.-%, vorzugsweise ≥ 3 bis ≤ 20 Gew.-% und bevorzugt 5 bis ≤ 15 Gew.-% wässrige Kaltweichschaumstabilisatorformulierung,
- ≥ 1 bis ≤ 20 Gew.-%, vorzugweise ≥ 2 bis ≤ 15 Gew.-% und bevorzugt ≥ 5 bis ≤ 10 Gew.-% Katalysator,
- ≥ 1 bis ≤ 90 Gew.-%, vorzugsweise ≥ 10 bis ≤ 80 Gew.-% und bevorzugt ≥ 30 bis ≤ 70 Gew.-% Treibmittel,
- ≥ 1 bis ≤ 90 Gew.-%, vorzugsweise ≥ 10 bis ≤ 80 Gew.-% und bevorzugt ≥ 30 bis ≤ 70 Gew.-% zusätzliches Wasser,
- ≥ 0 bis ≤ 70 Gew.-%, vorzugsweises ≥ 2 bis ≤ 60 Gew.-% und bevorzugt ≥ 5 bis ≤ 50 Gew.-% Zusätze,
wobei der Gewichtsanteil der vorgenannten Komponenten so gewählt ist, dass der Gesamtgewichtsanteil der Komponenten 100 Gew.-% bezogen auf die wässrige Kaltweichschaumaktivatorlösung ausmacht.

Bevorzugt enthält die homogene Kaltweichschaumaktivatorlösung ≥ 0,01 bis ≤ 10 Gew.-%, vorzugsweise ≥ 0,05 bis ≤ 5 Gew.-% und bevorzugt ≥ 0,1 bis ≤ 1 Gew.-% erfindungsgemäß verwendbares Polysiloxan, bezogen auf das Gesamtgewicht der homogenen Kaltweichschaumaktivatorlösung.

Als Katalysatoren können die im Stand der Technik für Aktivatorlösungen bekannten Katalysatoren verwendet werden. Als geeignete Katalysatoren sind übliche Metallkatalysatoren, wie Zinn- und Zink-Verbindungen verwendbar. Zu den geeigneten Katalysatoren zählen ferner Amine.

Die Polyurethanreaktion wird im Allgemeinen durch die Zugabe von Zinnaktivatoren katalysiert. Verwendet werden entweder Dibutylzinndilaurat (DBTDL), Zinn(II)octoat, Zinnrizinoleat oder auch geeignete Zink-Verbindungen. Die Einsatzmengen liegen üblicherweise zwischen 0,01 und 0,5 Teilen, bezogen auf 100,0 Teile Polyol, können aber auch davon abweichen.

Bei den Treibmitteln unterscheidet man zwischen chemischen und physikalischen Treibmitteln. Zu den chemischen Treibmitteln gehört Wasser, dessen Reaktion mit den Isocyanatgruppen zur Bildung von CO₂ führt. Die Rohdichte des Schaumstoffes lässt sich durch die zugegebene Wassermenge steuern, wobei die bevorzugten Einsatzmengen an Wasser zwischen 1,5 und 5,0 Teilen, bezogen auf 100,0 Teile Polyol, liegen. Darüber hinaus können alternativ und/oder auch zusätzlich, physikalische Treibmittel, wie Kohlendioxid, Aceton, Kohlenwasserstoffe, wie n-, iso- oder Cyclopentan, Cyclohexan, halogenierte Kohlenwasserstoffe, wie Methylenchlorid, Tetrafluorethan, Pentafluorpropan, Heptafluorpropan, Pentafluorbutan, Hexafluorbutan und/oder Dichlormonofluorethan, eingesetzt werden. Die Menge des physikalischen Treibmittels liegt dabei vorzugsweise im Bereich zwischen 1 bis 15 Gew.-Teilen, insbesondere 1 bis 10 Gew.-Teilen, die Menge an Wasser vorzugsweise im Bereich zwischen 0,5 bis 10 Gew.-Teilen, insbesondere 1 bis 5 Gew.-Teilen. Kohlendioxid wird von den physikalischen Treibmitteln bevorzugt, welches bevorzugt in Kombination mit Wasser als chemisches Treibmittel verwendet wird.

Es kann erfindungsgemäß bevorzugt sein, dass die Kaltweichschaumaktivatorlösung außer den erfindungsgemäßen wasserunlöslichen Polysiloxanverbindungen keine weiteren den Schaum stabilisierende wasserunlöslichen und/oder wasserlöslichen Siloxane aufweist.
Besonders bevorzugt kann es sein, dass die Kaltweichschaumaktivatorlösung außer den erfindungsgemäßen wasserunlöslichen Polysiloxanverbindungen keine weiteren Si-Atome enthaltende Moleküle aufweist.

Die Kaltweichschaumaktivatorlösung kann zusätzlich alle üblichen im Stand der Technik für Aktivatorlösungen bekannten Zusätze enthalten. Die Zusätze die ausgewählt sein können aus der Gruppe umfassend Flammschutzmittel, UV-Stabilisatoren, Farbstoffe, Biozide, Pigmente, Zellöffner, Vernetzer und dergleichen.

Die erfindungsgemäßen, wässrigen Kaltweichschaumstabilisatorformulierungen und/oder Kaltweichschaumaktivatorlösungen werden zur Herstellung von hochelastischen Polyurethankaltweichschäumen verwendet. Die erfindungsgemäßen, wässrigen Kaltweichschaumstabilisatorformulierungen und/oder Kaltweichschaumaktivatorlösungen sind für die Herstellung von Polyurethan-Kaltblockschaum als auch für die Herstellung von Polyurethan-Kaltformschaum geeignet.

Die erfindungsgemäßen wässrigen Kaltweichschaumstabilisatorformulierungen und/oder Kaltweichschaumaktivatorlösungen sind für die Herstellung von Polyurethanesterschäumen und anderen Polyurethanschäumen, wie Polyurethanheißweichschäumen ungeeignet.

Zur Herstellung eines Polyurethankaltweichschaums wird ein Gemisch aus Polyol, polyfunktionellem Isocyanat, Aminaktivator, Zinn- oder Zink- oder andere metallhaltige Katalysatoren, Stabilisator, Treibmittel, vorzugsweise Wasser zur Bildung von CO₂ und falls nötig, Zusatz von physikalischen Treibmitteln, gegebenenfalls unter Zugabe von Flammschutzmitteln, UV-Stabilisatoren, Farbpasten, Bioziden, Füllstoffen, Vernetzern oder sonstigen üblichen Verarbeitungshilfsmitteln, umgesetzt.

Als Polyole werden hochreaktive Polyole eingesetzt. Dabei handelt es sich bevorzugt um trifunktionelle Polyole, die neben einem hohen Molekulargewicht von üblicherweise zwischen etwa 4.800 und 6.500 g/mol mindestens 70 bis 95 % primäre Hydroxylgruppen aufweisen, so dass deren OH-Zahl zwischen 36 und 26 mg KOH/g liegt. Diese Polyole sind bis zu 90 % aus Propylenoxid aufgebaut, enthalten aber fast ausschließlich aus der Anlagerung von Ethylenoxid resultierende primäre OH-Endgruppen. Die primären OH-Gruppen sind weitaus reaktiver gegenüber den Isocyanatgruppen als die sekundären OH-Gruppen der für die Herstellung von Polyurethanheißweichschaum eingesetzten Polyole, deren OH-Zahlen bei Molekulargewichten zwischen 3.000 und 4.500 g/mol üblicherweise zwischen 56 und 42 mg KOH/g liegen.

Besonders bevorzugt lassen sich die Polyurethankaltschäume durch Umsetzung eines Gemisches aus hochreaktiven Polyolen, welche üblicherweise ein mittleres Molekulargewicht zwischen etwa 4.800 und 6.500 g/mol und mindestens 70 % primäre Hydroxylgruppen aufweisen und neben der Kaltweichschaumstabilisatorformulierung, Katalysatoren, wie Aminaktivatoren und Treibmittel gegebenenfalls Füllstoffe und/oder polyfunktionelle Isocyanate enthalten.

Die erfindungsgemäß verwendbaren wasserunlöslichen Polysiloxanverbindungen können in Anteilen von 0,005 bis 5,0 und bevorzugt in Anteilen von 0,01 bis 2 an wasserunlöslichen Polysiloxanverbindungen pro hundert Teile Polyol eingesetzt werden.

Hochreaktive Polyole erhält man beispielsweise durch Polyaddition von Propylenoxid bzw. Ethylenoxid an höherfunktionellen Verbindungen, wie Glycerin, Pentaerythrit oder Trimethylolpropan.

Eine weitere Klasse von hochreaktiven Polyolen stellen die so genannten Füllkörperpolyole (Polymerpolyole) dar. Diese zeichnen sich dadurch aus, dass sie feste organische Füllstoffe bis zu einem Feststoffgehalt von 40 % oder mehr in disperser Verteilung enthalten. Man verwendet unter anderem:
SAN-Polyole: Dies sind hochreaktive Polyole, welche ein Copolymer auf der Basis Styrol/Acrylnitril (SAN) dispergiert enthalten.
PHD-Polyole: Dies sind hochreaktive Polyole, welche Polyharnstoff ebenfalls in dispergierter Form enthalten.
PIPA-Polyole: Dies sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Der Festkörperanteil, der je nach Anwendung bevorzugt zwischen 5 und 40 Gew.-%, bezogen auf das Polyol liegt, ist für eine verbesserte Zellöffnung verantwortlich, so dass das Polyol insbesondere mit TDI kontrolliert verschäumbar wird und kein Schrumpfen der Schäume auftritt. Der Festkörper wirkt damit als wesentliche Prozesshilfe. Eine weitere Funktion besteht darin, über den Feststoffanteil die Härte zu kontrollieren, denn höhere Festkörperanteile bewirken eine höhere Härte des Schaums.

Die Formulierungen mit feststoffhaltigen Polyolen sind deutlich weniger eigenstabil und bedürfen daher neben der chemischen Stabilisierung durch die Vernetzungsreaktion eher auch zusätzlich einer physikalischen Stabilisierung.

Je nach Feststoffgehalt der Polyole werden diese alleine oder in Abmischung mit den oben genannten ungefüllten Polyolen eingesetzt.

Als Isocyanate können organische Isocyanatverbindungen verwendet werden, die mindestens zwei Isocyanat-Gruppen enthalten. Generell kommen die an sich bekannten aliphatischen, cycloaliphatischen, araliphatischen und vorzugsweise aromatischen mehrwertigen Isocyanate in Frage. Besonders bevorzugt werden Isocyanate in einem Bereich von 60 bis 140 mol-% relativ zu der Summe der isocyanatverbrauchenden Komponenten eingesetzt.

Es werden sowohl TDI (2,4- und 2,6-Toluylendiisocyanat-Isomerengemisch) als auch MDI (4,4'-Diphenylmethandiisocyanat) verwendet. Das sogenannte "crude MDI" oder "polymere MDI" enthält neben dem 4,4'- auch die 2,4'- und 2,2'-Isomeren sowie höherkernige Produkte. Als "pure MDI" bezeichnet man zweikernige Produkte aus überwiegend 2,4'- und 4,4'-Isomerengemischen bzw. deren Prepolymere. Weitere geeignete Isocyanate sind in der Patentschrift EP-B-1 095 968 aufgeführt, auf die hier im vollen Umfang Bezug genommen wird.

Für Blockschäume und Formschäume werden häufig unterschiedliche Isocyanate eingesetzt. So wird als polyfunktionelles Isocyanat in Kaltblockschaumsystemen in der Regel reines TDI (verschiedene 2,4- und 2,6-Isomerengemische) in Kombination mit feststoffhaltigen Polyolen eingesetzt. Es kommen darüber hinaus auch modifizierte TDI-Typen in Kombination mit hochreaktiven ungefüllten Polyolen zum Einsatz.

Als Aminaktivatoren bzw. -Katalysatoren sind alle dem Fachmann bekannten Substanzen geeignet. Es werden bevorzugt tertiäre Amine, wie das überwiegend vernetzende, d.h. die Reaktion zwischen Isocyanat und Polyol katalysierende Triethylendiamin (TEDA) oder der überwiegend treibende, d.h. die Reaktion zwischen Isocyanat und Wasser katalysierende Bis(2-dimethylaminoethyl)ether (BDE) eingesetzt. Viele Rezepturen beruhen auf einer Kombinationskatalyse dieser beiden Verbindungen. Es sind aber auch andere Amine möglich (weitere geeignete Amine sind in der Patentschrift EP-B-1 095 968 erwähnt). Die Einsatzmenge liegt üblicherweise zwischen 0,05 und 0,5 Teilen, bezogen auf 100,0 Teile Polyol. Ebenso können alle dem Fachmann bekannten metallhaltigen Katalysatoren verwendet werden. Diese sind beispielsweise metallorganische Verbindungen oder Metallsalze folgender Metalle: Zinn, Zink, Wolfram, Eisen, Wismut, Titan. In einer besonderen Ausführungsform werden Katalysatoren aus der Gruppe der Zink- oder Zinncarboxylate verwendet.

Als Vernetzer werden niedermolekulare, gegenüber Isocyanaten reaktive mehrfunktionelle Verbindungen bezeichnet. Geeignet sind Hydroxyl- oder Amin-terminierte Substanzen, wie Glycerin, Triethanolamin (TEOA), Diethanolamin (DEOA) und Trimethylolpropan. Die Einsatzkonzentration liegt üblicherweise zwischen 0,5 und 2, 0 Teilen, bezogen auf 100,0 Teile Polyol je nach Formulierung, kann aber auch davon abweichen. Bei Verwendung von crude MDI bei der Formverschäumung übernimmt dies ebenfalls eine vernetzende Funktion. Der Gehalt an niedermolekularen Vernetzern kann daher bei steigender Menge an crude MDI entsprechend reduziert werden.

Die erfindungsgemäßen Formulierungen können sowohl in der Block- als auch in der Formverschäumung verwendet werden. Es können alle dem Fachmann bekannten Verfahren zur Herstellung von PU-Schäumen verwendet werden. So kann zum Beispiel der Schäumungsprozess sowohl in horizontaler als auch in vertikaler Richtung erfolgen. Ebenso können die erfindungsgemäßen wässrigen Stabilisatorformulierungen für die CO₂-Technologie benutzt werden. Die Verwendung in Niederdruck- und Hochdruckmaschinen ist möglich, wobei die erfindungsgemäßen Formulierungen sowohl direkt in die Mischkammer dosiert werden können oder auch schon vor der Mischkammer einer der danach in die Mischkammer gelangenden Komponenten zugemischt werden. Die Zumischung kann auch im Rohstofftank erfolgen.

Ein weiterer Gegenstand der vorliegenden Erfindung betrifft ein Erzeugnis enthaltend einen hochelastischen Polyurethankaltweichschaum, der unter Verwendung der wässrigen Kaltweichschaumstabilisatorformulierung und/oder der Kaltweichschaumaktivatorlösung hergestellt worden ist.

Der Gegenstand der vorliegenden Erfindung wird anhand der nachstehenden Beispiele weiter erläutert.

### Beispiele:

### Herstellung erfindungsgemäßer wässriger Kaltweichschaumstabilisatorformulierungen

### Beispiel 1

### Wässrige Kaltweichschaumstabilisatorformulierung:

70 g eines Polydimethylsiloxans, wie in DE-A-25 33 074 Beispiel 4 als Gemisch 1 beschrieben, wurden mit 5 g eines Rizinusölethoxylats mit 160 mol Ethylenoxid, 5 g eines Isotridecylalkohols mit 12 mol Ethylenoxid und 120 g Wasser nach dem in DE-A-30 24 870 in Beispiel 3 beschrieben Verfahren zu einer Emulsion verarbeitet.

### Beispiel 2

### Wässrige Kaltweichschaumstabilisatorformulierung:

70 g des Polydimethylsiloxans gemäß Beispiel 1 mit 2 g Synperonic^{®} PE L 92 (Ethylenoxid-Proplylenoxid-Blockpolymer), 8 g Synperonic^{®} PE F 108 (Ethylenoxid-Proplylenoxid-Blockpolymer), beide erhältlich bei der Firma Uniqema, und 120 g Wasser wurden analog zu Beispiel 1 zu einer stabilen Emulsion verarbeitet.

### Beispiel 3

### Wässrige Kaltweichschaumstabilisatorformulierung:

70 g des Polydimethylsiloxans gemäß Beispiel 1 mit 6 g PE 4322-RM, erhältlich bei der Fa. Goldschmidt GmbH, 4 g des Polyalkylenoxids beschrieben in DE-A-1 994 07 97 unter der Bezeichnung A5, und 120 g Wasser, enthaltend 0,24 g Tego^{®} Carbomer 141 (erhältlich bei der Firma Goldschmidt) wurden analog zu Beispiel 1 zu einer stabilen Emulsion verarbeitet und anschließend noch 0,4 g Acticide^{®} MBS, erhältlich bei der Firma Thor, zugegeben.

### Beispiel 4

### Wässrige Kaltweichschaumstabilisatorformulierung:

200 g des Polydimethylsiloxans gemäß Beispiel 1 wurden mit 10 g eines Rizinusölethoxylats mit 160 mol Ethylenoxid, 10 g eines Isotridecylalkohols mit 12 mol Ethylenoxid und 180 g Wasser, enthaltend 0,36 g Tego^{®} Carbomer 141 (erhältlich bei der Firma Goldschmidt) wurden analog zu Beispiel 1 zu einer stabilen Emulsion verarbeitet und anschließend noch 0,8 g Acticide^{®} MBS, erhältlich bei der Firma Thor, zugegeben.

### Beispiel 5

### Wässrige Kaltweichschaumstabilisatorformulierung:

200 g des Polydimethylsiloxans gemäß Beispiel 1 wurden mit 10 g eines Rizinusölethoxylats mit 160 mol Ethylenoxid, 10 g eines Isotridecylalkohols mit 12 mol Ethylenoxid, 40 g Dipropylenglykol und 140 g Wasser, enthaltend 0,28 g Tego^{®} Carbomer 141 (erhältlich bei der Firma Goldschmidt) wurden analog zu Beispiel 1 zu einer stabilen Emulsion verarbeitet und anschließend noch 0,8 g Acticide^{®} MBS, erhältlich bei der Firma Thor, zugegeben.

### Beispiel 6

### Wässrige Kaltweichschaumstabilisatorformulierung:

Zu 10 g der Emulsion aus Beispiel 3 wurden unter Rühren langsam 490 g Wasser, enthaltend 0,98 g Tego^{®} Carbomer 141 (erhältlich bei der Firma Goldschmidt) zugegeben, so dass man eine stabile Emulsion erhielt.

### Beispiel 7

### Wässrige Kaltweichschaumstabilisatorformulierung:

Zu 10 g der Emulsion aus Beispiel 4 wurden unter Rühren langsam 440 g Wasser, enthaltend 0,88 g Tego^{®} Carbomer 141 (erhältlich bei der Firma Goldschmidt) und 50 g Dipropylenglkol zugegeben, so dass man eine stabile Emulsion erhielt.

### Beispiel 8

### Wässrige Kaltweichschaumstabilisatorformulierung:

70 g des Chlorpropyl-Siloxans, welches in DE-C-36 26 297 in den Beispielen als Polysiloxan III beschrieben wird, wurden mit 5 g eines Rizinusölethoxylats mit 160 mol Ethylenoxid, 5 g eines Isotridecylalkohols mit 12 mol Ethylenoxid und 120 g Wasser wie in Beispiel 1 beschrieben zu einer Emulsion verarbeitet und anschließend noch 0,4 g Acticide^{®} MBS (erhältlich bei der Firma Thor) zugegeben.

### Beispiel 9

### Herstellung einer Kaltweichschaumaktivatorlösung:

Es wurden 30 g der wässrigen Kaltweichschaumstabilisatorformulierung aus Beispiel 2 mit 382 g Wasser und eine Amin-Mischung bestehend aus 150 g Diethanolamin, 50 g TEGOAMIN^{®} 33 (33 %ige Lösung von Triethylendiamin in Dipropylenglykol) und 7 g TEGOAMIN^{®} BDE (70 %ige Lösung von Bis(Dimethylaminoethyl)ether in Dipropylenglykol) beide erhältlich bei der Firma Goldschmidt, verrührt. Man erhielt eine trübe Emulsion. Diese wurde in einem Scheidetricher für 10 Tage gelagert. Es wurden keine Inhomogenitäten oder Phasentrennungen beobachtet.

### Vergleichsbeispiel 1:

Es wurden 30 g Polydimethylsiloxan des Beispiels 1 mit 270 g Dioctylphthalat vermischt, wobei eine homogene Lösung entstand. 30 g dieser Formulierung wurden mit 382 g Wasser mit der in Beispiel 9 beschriebenen Amin-Mischung verrührt. Hierbei bildeten sich zwei Phasen. Es war nicht möglich eine homogene Aktivatorlösung herzustellen.

### Herstellung von Polyurethankaltweichschäumen:

Formulierung A: 100 Teile Polyol mit einer OH-Zahl von 35 mg KOH/g und einer Molmasse von 5.000 g/mol, 2,25 Teile Wasser, 0,5 Teile Diethanolamin, 0,4 Teile TEGOAMIN^{®} 33, 0,1 Teile TEGOAMIN^{®} BDE, 0,15 Teile KOSMOS 29 und 3 Teile Ortegol 204 von Goldschmidt als Vernetzer und 40 Teile Isocyanat (T80 = 2,4- und 2,6-Toluylendiisocyanat-Isomerengemisch im Verhältnis 80 : 20).

Formulierung B: 60 Teile Polyol mit einer von OH-Zahl 35 mg KOH/g und einer Molmasse von 5.000 g/mol, 40 Teile des PHD-Polyols mit 20 % Feststoffanteil und einer OH-Zahl 29 mg KOH/g sowie einer Molmasse von 6.000 g/mol, 4 Teile Wasser, 1,5 Teile Diethanolamin, 0,5 Teile TEGOAMIN^{®} 33 und 0,07 Teile TEGOAMIN^{®} BDE und 48 Teile Isocyanat (T80).

### Herstellung von Blockschaum mit Formulierung A:

Die Schäume wurden in der bekannten Art und Weise hergestellt, indem man alle Komponenten außer dem Isocyanat in einem Becher mischte, anschließend das Isocyanat zugab und bei hoher Rührerdrehzahl schnell einrührte. Dann gab man das Reaktionsgemisch in einen mit Papier ausgekleideten Behälter mit einer Grundfläche von 28 x 28 cm. Man bestimmte die Steighöhe und den Rückfall. Das Abblasen des Schaums wurde mit Werten von 0 bis 3 bewertet, wobei 0 für schlechtes bzw. nicht erkennbares und 3 für sehr starkes Abblasen vergeben wurde, wobei Werte von 1 bis 2 angestrebt wurden.
Als Rückfall wird die Abnahme der Steighöhe in cm 1 Minute nach Erreichen der maximalen Steighöhe bezeichnet.

Als Abblasen bezeichnet man das Entweichen der Treibgase aus den geöffneten Zellen des Schaums.

### Beispiel 10:

Als Stabilisator wurde die wässrige Kaltweichschaumstabilisatorformulierung aus Beispiel 1 verwendet, wobei die darin enthaltene Wassermenge, von 60 Gew.-% in der Schaumformulierung, berücksichtigt wurde. Die wässrige Kaltweichschaumstabilisatorformulierung wurde in einer Menge eingesetzt, dass 0,1 Teile wasserunlösliches Polysiloxan des Beispiels 1 auf 100 Teile Polyol kamen.

Der erhaltene Schaum hatte eine gute Stabilität. Bei einer Steighöhe von 22 cm betrug der Rückfall 0,5 cm. Das Abblasverhalten wurde mit 1 bis 2 bewertet. Die Zellenzahl betrug 12 Zellen/cm.

### Beispiel 11:

Als Stabilisator wurde die Kaltweichschaumstabilisatorformulierung aus Beispiel 2 verwendet, wobei die darin enthaltene Wassermenge in der Schaumformulierung berücksichtigt wurde. Es wurden 0,1 Teile Siloxan auf 100 Teile Polyol eingearbeitet. Der Schaum hatte eine gute Stabilität. Bei einer Steighöhe von 22,8 cm betrug der Rückfall 0,4 cm. Das Abblasverhalten wurde mit 1 bis 2 bewertet. Die Zellenzahl betrug 12 Zellen/cm.

### Beispiel 12:

Als Stabilisator wurde die Kaltweichschaumstabilisatorformulierung aus Beispiel 3 verwendet, wobei die darin enthaltene Wassermenge in der Schaumformulierung berücksichtigt wurde. Es wurden 0,1 Teile Siloxan auf 100 Teile Polyol eingearbeitet. Der Schaum hatte eine gute Stabilität. Bei einer Steighöhe von 22,6 cm betrug der Rückfall 0,5 cm. Das Abblasverhalten wurde mit 1 bis 2 bewertet. Die Zellenzahl betrug 12 Zellen/cm.

### Beispiele im Formschaum, Formulierung B:

Die Schäume wurden in der bekannten Art und Weise hergestellt, indem man alle Komponenten außer dem Isocyanat in einem Becher mischte, anschließend das Isocyanat zugab und bei hoher Rührerdrehzahl schnell einrührte. Dann gab man das Reaktionsgemisch in eine quaderförmige Form, die auf eine Temperatur von 60° C erwärmt war und ließ die Masse für 6 Minuten aushärten. Anschließend wurden die Aufdrückkräfte gemessen. Hierbei wurden die Schäume 10 mal auf 50 % ihrer Höhe komprimiert. Dann wurde (manuell) vollständig aufgedrückt um anschließend beim 11. Messwert die Härte des aufgedrückten Schaums bestimmen zu können. Danach wurden die Schäume aufgeschnitten um Haut und Randzone zu beurteilen und die Zellenzahl zu bestimmen.

### Beispiel 13:

Es wurde hier die Aktivatorlösung aus Beispiel 9 verwendet, wobei man nach einer Woche Lagerung aus dem oberen Teil des Scheidetrichters die benötigte Menge an Aktivatorlösung entnahm.

Es wurden entsprechend Formulierung B 6,12 Teile der Aktivatorlösung auf 100 Teile der Polyol-Mischung und 48 Teile Isocyanat zur Herstellung eines Formschaums verwendet.
Die Aufdrückkräfte waren folgendermaßen: 1. Messwert: 1279 N, 10. Messwert: 165 N, 11. Messwert: 129 N. Haut und Randzone zeigten keine Fehler. Die Zellenzahl betrug 9 Zellen/cm.

### Beispiel 14:

Es wurde hier die Aktivatorlösung aus Beispiel 9 verwendet, wobei man nach einer Woche Lagerung aus dem unteren Teil des Scheidetrichters die benötigte Menge an Aktivatorlösung entnahm.

Es wurden entsprechend Formulierung B 6,12 Teile der Aktivatorlösung auf 100 Teile der Polyol-Mischung und 48 Teile Isocyanat zur Herstellung eines Formschaums verwendet.
Die Aufdrückkräfte waren folgendermaßen: 1. Messwert: 1333 N, 10. Messwert: 160 N, 11. Messwert: 131 N. Haut und Randzone zeigten keine Fehler. Die Zellenzahl betrug 9 Zellen/cm.

Aus diesen beiden Beispielen ist ersichtlich, dass die Aktivatorlösung auf Basis der erfindungsgemäßen Formulierung bei 23° C über einen Zeitraum von mindestens 10 Tagen stabil war.

## Patentansprüche

1. Wässrige Kaltweichschaumstabilisatorformulierung zur Verwendung bei der Herstellung von hochelastischen Polyurethankaltweichschäumen oder zur Verwendung bei der Herstellung von Kaltweichschaumaktivatorlösungen für hochelastische Polyurethankaltschäume, **dadurch gekennzeichnet, dass** die wässrige Kaltweichschaumstabilisatorformulierung die nachstehenden Komponenten umfasst
a) ≥ 0,1 bis ≤ 80 Gew.-% wenigstens einer wasserunlöslichen Polysiloxanverbindung mit einem Molekulargewicht von wenigstens ≥ 300 und ≤ 10.000 g/mol,
b) ≥ 2 Gew.-% Wasser,
c) ≥ 0,1 Gew.-% Tensid,
d) ≥ 0 bis 10 Gew.-% Zusätze, ausgewählt aus der Gruppe umfassend Verdicker, Frostschutzmittel, organische Lösungsmittel und/oder Biozide,
e) ≥ 0 Gew.-% wasserlösliche/s Siloxan/e,
wobei der Gewichtsanteil der vorgenannten Komponenten so gewählt ist, dass der Gesamtgewichtsanteil der Komponenten maximal 100 Gew.-%, bezogen auf die wässrige Kaltweichschaumstabilisatorformulierung, ausmacht.

2. Wässrige Kaltweichschaumstabilisatorformulierung nach Anspruch 1, **dadurch gekennzeichnet, dass** die wässrige Kaltweichschaumstabilisatorformulierung die nachstehenden Komponenten umfasst
a) 0,1 bis 80 Ges.-% wenigstens einer wasserunlöslichen Polysiloxanverbindung mit einem Molekulargewicht von ≤ 10.000 g/mol und mit der nachstehenden allgemeinen Formel I 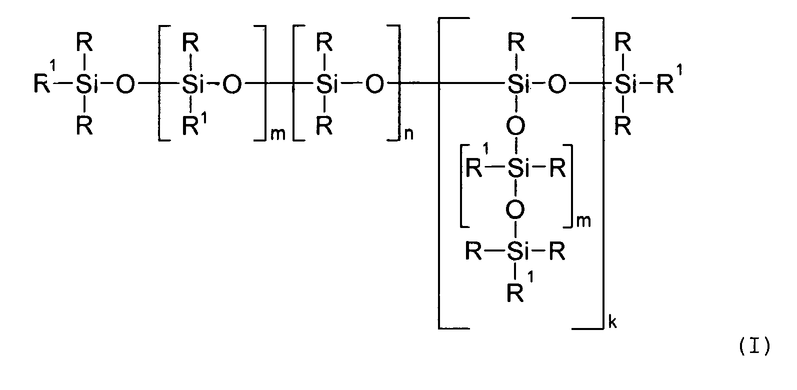 worin
R gleich oder verschieden voneinander, ein linearer, verzweigter, ungesättigter oder gesättigter Kohlenwasserstoffrest mit 1 bis 50 C-Atomen,
R¹ R, OH, gleich oder verschieden voneinander, ein linearer, verzweigter, ungesättigter oder gesättigter Kohlenwasserstoffrest mit 1 bis 100 C-Atomen enthaltend wenigstens ein Heteroatom ausgewählt aus der Gruppe N, S, O, P, F, Cl, Br und/oder I,
n ≥ 0 bis 50, m ≥ 0 bis 50,
k ≥ 0 bis 10,
b) 2 bis 99 Gew.-% Wasser,
c) 0,1 bis 90 Gew.-% Tensid,
d) ≥ 0 bis 10 Gew.-% Zusätze, ausgewählt aus der Gruppe umfassend Verdicker, Frostschutzmittel, organische Lösungsmittel und/oder Biozide,
e) ≥ 0 bis 80 Gew.-% wasserlösliche/s Siloxan/e,
mit der Bedingung das n + m ≥ 2 und n + m ≤ 70 ist, wobei der Gewichtsanteil der vorgenannten Komponenten so gewählt ist, dass der Gesamtgewichtsanteil der Komponenten, bezogen auf das Gesamtgewicht der wässrigen Kaltweichschaumstabilisatorformulierung, maximal 100 Gew.-% ausmacht.

3. Wässrige Kaltweichschaumstabilisatorformulierung nach Anspruch 1 oder 2, worin
R gleich oder verschieden voneinander, Alkyl- oder Arylrest, vorzugsweise Methyl, Ethyl oder Propyl und bevorzugt Methyl,
n 1 bis 50, vorzugsweise 3 bis 40 und besonders bevorzugt 5 bis 25,
m ≥ 1 bis 20, vorzugsweise 2 bis 15 und besonders bevorzugt 3 bis 10,
k ≥ 1 bis 10, vorzugsweise 2 bis 8 und besonders bevorzugt 3 bis 6,
sind.

4. Wässrige Kaltweichschaumstabilisatorformulierung nach einem der vorstehenden Ansprüche, worin wenigstens ein R¹ eine Seitenkette ist, gemäß der Formel II 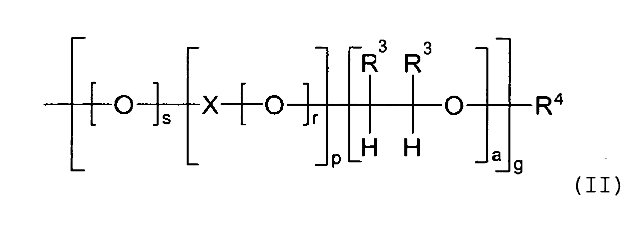 worin
R³ gleich oder verschieden voneinander H, Methyl, Ethyl, Propyl oder Phenyl,
R⁴ gleich oder verschieden voneinander H, Alkyl-, Acyl-, Acetyl-, Arylrest, vorzugsweise ein einwertiger oder zweiwertiger Kohlenwasserstoffrest mit 1 bis 30 C-Atomen und bevorzugt ein einwertiger (g = 1) oder zweiwertiger (g = 2) Kohlenwasserstoffrest mit 1 bis 30 C-Atomen mit wenigstens einem Heteroatom ausgewählt aus der Gruppe N, S, O, P, F, Cl, Br und/oder I,
X ein gesättigter-, ungesättigter-, verzweigter-, cylischer-, difunktioneller Kohlenwasserstoff mit 1 bis 30 C-Atomen, der auch Heteroatome wie N oder O enthalten kann,
a ≥ 0 bis ≤ 30, vorzugsweise 1 bis 25 und bevorzugt 2 bis 20,
g 1 oder 2,
p 0 oder 1,
r 0 oder 1,
s 0 oder 1,
sind.

5. Wässrige Kaltweichschaumstabilisatorformulierung nach einem der vorstehenden Ansprüche, worin die wasserunlösliche Polysiloxanverbindung die nachstehende Formel III aufweist 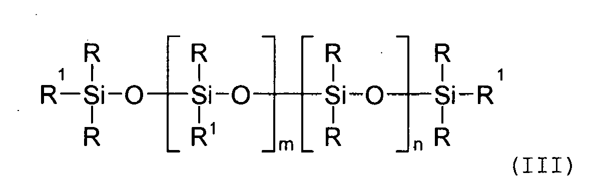 worin
R gleich oder verschieden voneinander Methyl oder Ethyl,
R¹ R, OH, gleich oder verschieden voneinander Hydroxy-, Amino-, Chlor- oder Cyano-Gruppen enthaltende Alkylreste, vorzugsweise Hydroxyalkyl, Aminoalkyl, Chlorpropyl oder Cyanopropyl,
n ≥ 2 bis 30, bevorzugt 3 bis 25 und besonders bevorzugt 4 bis 25,
m ≥ 0 bis ≤ 5,
sind.

6. Wässrige Kaltweichschaumstabilisatorformulierung nach einem der vorstehenden Ansprüche, worin der Quotient gebildet aus dem Massenanteil der eingesetzten Tenside durch den Massenanteil der wasserunlöslichen Siloxane in der Kaltweichschaumstabilisatorlösung 0 < Q ≤ 1, insbesondere Q ≤ 0,5, noch bevorzugter ≤ 0,2 oder sogar Q ≤ 0,15, ist.

7. Wässrige Kaltweichschaumstabilisatorformulierung nach einem der vorstehenden Ansprüche, worin die wasserunlöslichen Polysiloxane ein Molekulargewicht von 300 bis 4.000 g/mol, vorzugsweise 350 bis 3.500 g/mol und besonders bevorzugt 400 bis 3.000 g/mol aufweisen.

8. Wässrige Kaltweichschaumstabilisatorformulierung nach einem der vorstehenden Ansprüche, worin die wasserunlösliche Polysiloxanverbindung im Molekül maximal 70 Si-Atome, bevorzugt maximal 50, besonders bevorzugt 5 bis 25, wobei Polydimethylsiloxane mit 5 bis 25 Si-Atomen im Molekül am meisten bevorzugt sind.

9. Wässrige Kaltweichschaumstabilisatorformulierung nach einem der vorstehenden Ansprüche, worin die Polyethereinheiten eine Molmasse von 44 bis 1.000 g/mol, vorzugsweise 58 bis 750 g/mol und bevorzugt 88 bis 500 g/mol aufweisen.

10. Wässrige Kaltweichschaumstabilisatorformulierung nach einem der vorstehenden Ansprüche, worin die Kaltweichschaumstabilisatorformulierung
a) ≥ 0,1 bis ≤ 80 Gew.-%, vorzugsweise ≥ 0,2 bis ≤ 60 Gew.-% und bevorzugt 0,3 bis ≤ 50 Gew.-% wasserunlösliches Polysiloxan, wobei ein wasserunlösliches Polysiloxan von 0,5 bis ≤ 40 Gew.-% besonders bevorzugt ist,
b) ≥ 5 bis ≤ 99 Gew.-%, vorzugsweise ≥ 10 bis ≤ 95 Gew.-% und bevorzugt ≥ 30 bis ≤ 90 Gew.-% Wasser,
c) ≥ 0,1 bis ≤ 99 Gew.-%, vorzugsweise ≥ 0,2 bis ≤ 90 Gew.-% und bevorzugt ≥ 0,3 bis ≤ 40 Gew.-% Tensid,
d) ≥ 0 bis 10 Gew.-% und bevorzugt 0,1 bis 5 Gew.-% Zusätze,
e) ≥ 0 bis ≤ 80 Gew.-%, vorzugsweise ≥ 0 bis ≤ 60 Gew.-% und bevorzugt 0 bis ≤ 50 Gew.-% wasserlösliche/s Siloxan/e, wobei der Gewichtsanteil der vorgenannten Komponenten so gewählt ist, dass der Gesamtgewichtsanteil der Komponenten, bezogen auf das Gesamtgewicht der wässrigen Kaltweichschaumstabilisatorformulierung, maximal 100 Gew.-% ausmacht,
umfasst.

11. Wässrige Kaltweichschaumstabilisatorformulierung nach einem der vorstehenden Ansprüche, worin die Kaltweichschaumstabilisatorformulierung
a) ≥ 0,5 bis ≤ 35 Gew.-%, vorzugsweise ≥ 1 bis ≤ 30 Gew.-% und bevorzugt 3 bis ≤ 25 Gew.-% wasserunlösliches Polysiloxan,
b) ≥ 5 bis ≤ 99 Gew.-%, vorzugsweise ≥ 20 bis ≤ 95 Gew.-% und bevorzugt ≥ 40 bis ≤ 90 Gew.-% Wasser und
c) ≥ 0,2 bis ≤ 20 Gew.-%, vorzugsweise ≥ 0,3 bis ≤ 15 Gew.-% und bevorzugt 0,5 bis ≤ 10 Gew.-% Tensid,
d) ≥ 0 bis 10 Gew.-% und bevorzugt 0,1 bis 5 Gew.-% Zusätze,
e) ≥ 0 bis ≤ 30 Gew.-%, vorzugsweise ≥ 0 bis ≤ 25 Gew.-% und bevorzugt 0 bis ≤ 20 Gew.-% wasserlösliche/s Siloxan/e,
wobei der Gewichtsanteil der vorgenannten Komponenten so gewählt ist, dass der Gesamtgewichtsanteil der Komponenten, bezogen auf das Gesamtgewicht der wässrigen Kaltweichschaumstabilisatorformulierung, maximal 100 Gew.-% ausmacht,
umfasst.

12. Wässrige Kaltweichschaumstabilisatorformulierung nach einem der vorherigen Ansprüche, wobei die wasserunlöslichen Polydimethylsiloxane, worin alle Reste Methylreste sind und m = 0 ist, eine Viskosität von ≥ 0 bis ≤ 100 mPas, vorzugsweise ≥ 0,5 bis ≤ 80 mPas, bevorzugt ≥ 1 bis ≤ 70 mPas und besonders bevorzugt ≥ 1,5 bis ≤ 50 mPas aufweist.

13. Wässrige Kaltweichschaumstabilisatorformulierung nach einem der vorstehenden Ansprüche, worin das wasserlösliche Tensid ausgewählt ist aus der Gruppe umfassend anionische Tenside, kationische Tenside, nichtionische Tenside und/oder amphotere Tenside, wobei besonders bevorzugt ≥ 90 Gew.-% des Tensids ein wasserlösliches Niotensid ist.

14. Wässrige Kaltweichschaumstabilisatorformulierung nach einem der vorherigen Ansprüche, wobei die wässrige Kaltweichschaumstabilisatorformulierung bei Raumtemperatur lagerstabil ist und über einen Zeitraum von mindestens 10 Tagen, vorzugsweise von mindestens 50 Tagen und bevorzugt von mindestens 100 Tagen keine Phasentrennung ausbildet und/oder makroskopisch keine Inhomogenität der wässrigen Kaltweichschaumstabilisatorformulierung auftritt.

15. Verwendung der wässrigen Kaltweichschaumstabilisatorformulierung nach einem der Ansprüche 1 bis 14 zur Herstellung einer homogenen Kaltweichschaumaktivatorlösung.

16. Homogene Kaltweichschaumaktivatorlösung, zur Verwendung bei der Herstellung von hochelastischen Polyurethankaltweichschäumen, enthaltend eine wässrige Kaltweichschaumstabilisatorformulierung nach einem der Ansprüche 1 bis 14 und Additive ausgewählt aus der Gruppe umfassend
- Katalysatoren, vorzugsweise Amine, Metallkatalysatoren,
- Treibmittel, vorzugsweise Aceton, Methylenchlorid,
- zusätzliches Wasser,
sowie gegebenenfalls Zusätze umfassend Flammschutzmittel, UV-Stabilisatoren, Farbstoffe, Biozide, Pigmente, Zellöffner, Vernetzer, andere schaumstabilisierende Substanzen und übliche Zusatzstoffe.

17. Homogene Kaltweichschaumaktivatorlösung nach Anspruch 16 zur Verwendung bei der Herstellung von hochelastischen Polyurethankaltweichschäumen, enthaltend
- ≥ 2 bis ≤ 25 Gew.-%, vorzugsweise ≥ 3 bis ≤ 20 Gew.-% und bevorzugt 5 bis ≤ 15 Gew.-% wässrige Kaltweichschaumstabilisatorformulierung,
- ≥ 1 bis ≤ 20 Gew.-%, vorzugsweise ≥ 2 bis ≤ 15 Gew.-% und bevorzugt ≥ 5 bis ≤ 10 Gew.-% Katalysator,
- ≥ 1 bis ≤ 90 Gew.-%, vorzugsweise ≥ 10 bis ≤ 80 Gew.-% und bevorzugt ≥ 30 bis ≤ 70 Gew.-% Treibmittel,
- ≥ 1 bis ≤ 90 Gew.-%, vorzugsweise ≥ 10 bis ≤ 80 Gew.-% und bevorzugt ≥ 30 bis ≤ 70 Gew.-% zusätzliches Wasser,
- ≥ 0 bis ≤ 70 Gew.-%, vorzugsweise ≥ 2 bis ≤ 60 Gew.-% und bevorzugt ≥ 5 bis ≤ 50 Gew.-% Zusätze,
wobei der Gewichtsanteil der vorgenannten Komponenten so gewählt ist, dass der Gesamtgewichtsanteil der Komponenten maximal 100 Gew.-%, bezogen auf die wässrige Kaltweichschaumaktivatorlösung, ausmacht.

18. Homogene Kaltweichschaumaktivatorlösung nach Anspruch 16 oder 17 enthaltend ≥ 0,01 bis ≤ 10 Gew.-%, vorzugsweise ≥ 0,05 bis ≤ 5 Gew.-% und bevorzugt ≥ 0,1 bis ≤ 1 Gew.-% wasserunlösliches Polysiloxan, bezogen auf das Gesamtgewicht der homogenen Kaltweichschaumaktivatorlösung.

19. Homogene Kaltweichschaumaktivatorlösung, nach einem der Ansprüche 16 bis 18, wobei die homogene Kaltweichschaumaktivatorlösung bei Raumtemperatur lagerstabil ist und über einen Zeitraum von mindestens 10 Tagen, vorzugsweise mindestens 50 Tagen und bevorzugt von mindestens 100 Tagen keine Phasentrennung ausbildet und/oder wobei makroskopisch keine Inhomogenität der Kaltweichschaumaktivatorlösung auftritt.

20. Verwendung der wässrigen Kaltweichschaumstabilisatorformulierung nach einem der Ansprüche 1 bis 14 und/oder der Kaltweichschaumaktivatorlösung nach einem der Ansprüche 16 bis 19 zur Herstellung von Polyurethankaltweichschäumen.

21. Polyurethankaltweichschaum erhältlich aus der Reaktion von Polyolen mit Isocyanaten unter Verwendung einer wässrigen Kaltweichschaumstabilisatorformulierung nach einem der Ansprüche 1 bis 14 und/oder einer homogenen Kaltweichschaumaktivatorlösung nach einem der Ansprüche 16 bis 19.

22. Erzeugnis enthaltend einen hochelastischen Polyurethankaltweichschaum nach Anspruch 21.

## Claims

1. Aqueous cold-cure flexible foam stabilizer formulation for use in the production of highly elastic cold-cure flexible polyurethane foams or for use in the production of cold-cure flexible foam activator solutions for highly elastic cold-cure polyurethane foams, **characterized in that** the aqueous cold-cure flexible foam stabilizer formulation comprises the following components
a) from ≥ 0.1 to ≤ 80% by weight of at least one water-insoluble polysiloxane compound having a molecular weight of from ≥ 300 g/mol to ≤ 10 000 g/mol,
b) ≥ 2% by weight of water,
c) ≥ 0.1% by weight of surfactant,
d) from ≥ 0 to 10% by weight of additives selected from the group consisting of thickeners, antifreezes, organic solvents and biocides,
e) ≥ 0% by weight of water-soluble siloxane(s),
with the proportion by weight of the abovementioned components being selected so that the sum of the proportions by weight of the components is not more than 100% by weight, based on the aqueous cold-cure flexible foam stabilizer formulation.

2. Aqueous cold-cure flexible foam stabilizer formulation according to Claim 1, **characterized in that** the aqueous cold-cure flexible foam stabilizer formulation comprises the following components
a) from 0.1 to 80% by weight of at least one water-insoluble polysiloxane compound having a molecular weight of ≤ 10 000 g/mol and the general formula I: 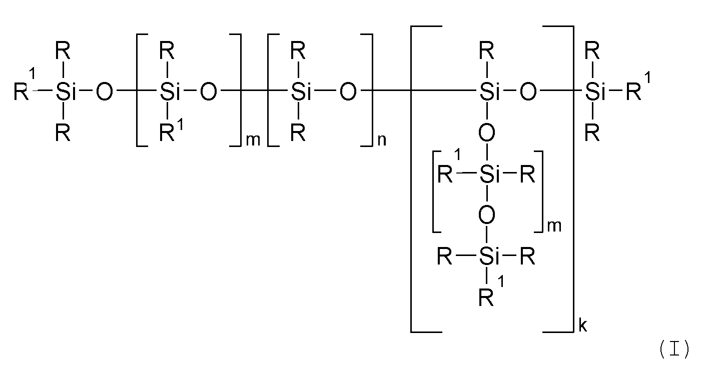 where the radicals
R are identical or different and are each a linear, branched, unsaturated or saturated hydrocarbon radical having from 1 to 50 carbon atoms, the radicals
R¹ are identical or different and are each R, OH or a linear, branched, unsaturated or saturated hydrocarbon radical having from 1 to 100 carbon atoms and containing at least one heteroatom selected from the group consisting of N, S, O, P, F, Cl, Br and/or I,
n is from ≥ 0 to 50,
m is from ≥ 0 to 50,
k is from ≥ 0 to 10,
b) from 2 to 99% by weight of water,
c) from 0.1 to 90% by weight of surfactant,
d) from ≥ 0 to 10% by weight of additives selected from the group consisting of thickeners, antifreezes, organic solvents and biocides,
e) from ≥ 0 to 80% by weight of water-soluble siloxane(s),
with the proviso that n + m ≥ 2 and n + m ≤ 70 and with the proportion by weight of the abovementioned components being selected so that the sum of the proportions by weight of the components, based on the total weight of the aqueous cold-cure flexible foam stabilizer formulation, is not more than 100% by weight.

3. Aqueous cold-cure flexible foam stabilizer formulation according to Claim 1 or 2, wherein
R are identical or different and are each an alkyl or aryl radical, preferably methyl, ethyl or propyl and more preferably methyl,
n is from 1 to 50, preferably from 3 to 40 and particularly preferably from 5 to 25,
m is from ≥ 1 to 20, preferably from 2 to 15 and particularly preferably from 3 to 10,
k is from ≥ 1 to 10, preferably from 2 to 8 and particularly preferably from 3 to 6.

4. Aqueous cold-cure flexible foam stabilizer formulation according to any of the preceding claims, wherein at least one R¹ is a side chain of the formula II: 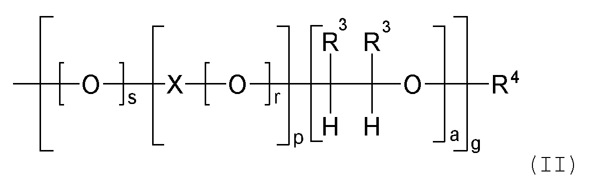 where the radicals
R³ are identical or different and are each H, methyl, ethyl, propyl or phenyl,
the radicals
R⁴ are identical or different and are each H or an alkyl, acyl, acetyl, aryl radical, preferably a monovalent or divalent hydrocarbon radical having from 1 to 30 carbon atoms and more preferably a monovalent (g = 1) or divalent (g = 2) hydrocarbon radical having from 1 to 30 carbon atoms and at least one heteroatom selected from the group consisting of N, S, O, P, F, Cl, Br and/or I,
X is a saturated, unsaturated, branched, cyclic, bifunctional hydrocarbon which has from 1 to 30 carbon atoms and can also contain heteroatoms such as N or O,
a is from ≥ 0 to ≤ 30, preferably from 1 to 25 and more preferably from 2 to 20,
g is 1 or 2,
p is 0 or 1,
r is 0 or 1,
s is 0 or 1.

5. Aqueous cold-cure flexible foam stabilizer formulation according to any of the preceding claims, wherein the water-insoluble polysiloxane compound has the formula III: 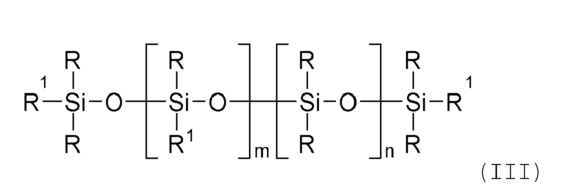 where the radicals
R are identical or different and are each methyl or ethyl,
the radicals
R¹ are identical or different and are each R, OH or an alkyl radical containing hydroxy, amino, chloro or cyano groups, preferably hydroxyalkyl, aminoalkyl, chloropropyl or cyanopropyl,
n is from ≥ 2 to 30, preferably from 3 to 25 and particularly preferably from 4 to 25,
m is from ≥ 0 to ≤ 5.

6. Aqueous cold-cure flexible foam stabilizer formulation according to any of the preceding claims, wherein the ratio (Q) of the proportion by mass of the surfactants used to the proportion by mass of the water-insoluble siloxanes in the cold-cure flexible foam stabilizer solution is in the range 0 < Q ≤ 1, in particular Q ≤ 0.5, more preferably ≤ 0.2 or even Q ≤ 0.15.

7. Aqueous cold-cure flexible foam stabilizer formulation according to any of the preceding claims, wherein the water-insoluble polysiloxanes have a molecular weight of from 300 to 4000 g/mol, preferably from 350 to 3500 g/mol and particularly preferably from 400 to 3000 g/mol.

8. Aqueous cold-cure flexible foam stabilizer formulation according to any of the preceding claims, wherein the water-insoluble polysiloxane compound has a maximum of 70 Si atoms, preferably a maximum of 50 Si atoms, particularly preferably from 5 to 25 Si atoms, in the molecule, with polydimethylsiloxanes having from 5 to 25 Si atoms in the molecule being most preferred.

9. Aqueous cold-cure flexible foam stabilizer formulation according to any of the preceding claims, wherein the polyether units have a molar mass of from 44 to 1000 g/mol, preferably from 58 to 750 g/mol and more preferably from 88 to 500 g/mol.

10. Aqueous cold-cure flexible foam stabilizer formulation according to any of the preceding claims, wherein the cold-cure flexible foam stabilizer formulation comprises
a) from ≥ 0.1 to ≤ 80% by weight, preferably from ≥ 0.2 to ≤ 60% by weight and more preferably from 0.3 to ≤ 50% by weight, of water-insoluble polysiloxane, with a water-insoluble polysiloxane in an amount of from 0.5 to ≤ 40% by weight being particularly preferred,
b) from ≥ 5 to ≤ 99% by weight, preferably from ≥ 10 to ≤ 95% by weight and more preferably from ≥ 30 to ≤ 90% by weight, of water,
c) from ≥ 0.1 to ≤ 99% by weight, preferably from ≥ 0.2 to ≤ 90% by weight and more preferably from ≥ 0.3 to ≤ 40% by weight, of surfactant,
d) from ≥ 0 to 10% by weight and preferably from 0.1 to 5% by weight of additives,
e) from ≥ 0 to ≤ 80% by weight, preferably ≥ 0 to ≤ 60% by weight and more preferably from 0 to ≤ 50% by weight, of water-soluble siloxane(s), with the proportion by weight of the abovementioned components being selected so that the sum of the proportions by weight of the components, based on the total weight of the aqueous cold-cure flexible foam stabilizer formulation, is not more than 100% by weight.

11. Aqueous cold-cure flexible foam stabilizer formulation according to any of the preceding claims, wherein the cold-cure flexible foam stabilizer formulation comprises
a) from ≥ 0.5 to ≤ 35% by weight, preferably from ≥ 1 to ≤ 30% by weight and more preferably from 3 to ≤ 25% by weight, of water-insoluble polysiloxane,
b) from ≥ 5 to ≤ 99% by weight, preferably from ≥ 20 to ≤ 95% by weight and more preferably from ≥ 40 to
≤ 90% by weight, of water and
c) from ≥ 0.2 to ≤ 20% by weight, preferably from ≥ 0.3 to ≤ 15% by weight and more preferably from 0.5 to
≤ 10% by weight, of surfactant,
d) from ≥ 0 to 10% by weight and preferably from 0.1 to 5% by weight of additives,
e) from ≥ 0 to ≤ 30% by weight, preferably from ≥ 0 to ≤ 25% by weight and more preferably from 0 to ≤ 20% by weight, of water-soluble siloxane(s),
with the proportion by weight of the abovementioned components being selected so that the sum of the proportions by weight of the components, based on the total weight of the aqueous cold-cure flexible foam stabilizer formulation, is not more than 100% by weight.

12. Aqueous cold-cure flexible foam stabilizer formulation according to any of the preceding claims, wherein the water-insoluble polydimethylsiloxane in which all radicals are methyl radicals and m = 0 has a viscosity of from ≥ 0 to ≤ 100 mPas, preferably from ≥ 0.5 to ≤ 80 mPas, more preferably from ≥ 1 to ≤ 70 mPas and particularly preferably from ≥ 1.5 to ≤ 50 mPas.

13. Aqueous cold-cure flexible foam stabilizer formulation according to any of the preceding claims, wherein the water-soluble surfactant is selected from the group consisting of anionic surfactants, cationic surfactants, nonionic surfactants and amphoteric surfactants, with particular preference being given to ≥ 90% by weight of the surfactant being a water-soluble niosurfactant.

14. Aqueous cold-cure flexible foam stabilizer formulation according to any of the preceding claims, wherein the aqueous cold-cure flexible foam stabilizer formulation is storage-stable at room temperature and undergoes no phase separation over a period of at least 10 days, preferably at least 50 days and more preferably at least 100 days, and/or no macroscopic inhomogeneity of the aqueous cold-cure flexible foam stabilizer formulation is observed.

15. Use of the aqueous cold-cure flexible foam stabilizer formulation according to any of Claims 1 to 14 for producing a homogeneous cold-cure flexible foam activator solution.

16. Homogeneous cold-cure flexible foam activator solution for use in the production of highly elastic cold-cure flexible polyurethane foams, which comprises an aqueous cold-cure flexible foam stabilizer formulation according to any of Claims 1 to 14 and additives selected from the group consisting of
- catalysts, preferably amines, metal catalysts,
- blowing agents, preferably acetone, methylene chloride,
- additional water,
and, if appropriate, additives encompassing flame retardants, UV stabilizers, dyes, biocides, pigments, cell openers, crosslinkers, other foam-stabilizing substances and customary auxiliaries.

17. Homogeneous cold-cure flexible foam activator solution according to Claim 16 for use in the production of highly elastic cold-cure flexible polyurethane foams, which comprises
- from ≥ 2 to ≤ 25% by weight, preferably from ≥ 3 to ≤ 20% by weight and more preferably from 5 to ≤ 15% by weight, of aqueous cold-cure flexible foam stabilizer formulation,
- from ≥ 1 to ≤ 20% by weight, preferably from ≥ 2 to ≤ 15% by weight and more preferably from ≥ 5 to ≥ 10% by weight, of catalyst,
- from ≥ 1 to ≤ 90% by weight, preferably from ≥ 10 to ≤ 80% by weight and more preferably from ≥ 30 to
≥ 70% by weight, of blowing agents,
- from ≥ 1 to ≤ 90% by weight, preferably from ≥ 10 to ≤ 80% by weight und more preferably from ≥ 30 to
≤ 70% by weight, of additional water,
- from ≥ 0 to ≤ 70% by weight, preferably from ≥ 2 to 60% by weight and more preferably from ≥ 5 to 50% by weight of additives,
with the proportion by weight of the abovementioned components being selected so that the sum of the proportions by weight of the components is not more than 100% by weight, based on the aqueous cold-cure flexible foam activator solution.

18. Homogeneous cold-cure flexible foam activator solution according to Claim 16 or 17 comprising from ≥ 0.01 to ≤ 10% by weight, preferably from ≥ 0.05 to ≤ 5% by weight and more preferably from ≥ 0.1 to ≤ 1% by weight, of water-insoluble polysiloxane, based on the total weight of the homogeneous cold-cure flexible foam activator solution.

19. Homogeneous cold-cure flexible foam activator solution according to any of Claims 16 to 18, wherein the homogeneous cold-cure flexible foam activator solution is storage-stable at room temperature and undergoes no phase separation over a period of at least 10 days, preferably at least 50 days and more preferably at least 100 days, and/or no macroscopic inhomogeneity of the cold-cure flexible foam activator solution is observed.

20. Use of the aqueous cold-cure flexible foam stabilizer formulation according to any of Claims 1 to 14 and/or the cold-cure flexible foam activator solution according to any of Claims 16 to 19 for producing cold-cure flexible polyurethane foams.

21. Cold-cure flexible polyurethane foam which can be obtained from the reaction of polyols with isocyanates using an aqueous cold-cure flexible foam stabilizer formulation according to any of Claims 1 to 14 and/or a homogeneous cold-cure flexible foam activator solution according to any of Claims 16 to 19.

22. Product comprising a highly elastic cold-cure flexible polyurethane foam according to Claim 21.

## Revendications

1. Formulation aqueuse de stabilisateur de mousse souple froide destinée à une utilisation lors de la préparation de mousses souples froides de polyuréthane hautement élastiques ou à une utilisation lors de la préparation de solutions d'activateur de mousse souple froide pour mousses de polyuréthane hautement élastiques, **caractérisée en ce que** la formulation aqueuse de stabilisateur de mousse souple froide comprend les composants suivants
a) ≥ 0,1 à ≤ 80% en poids d'au moins un composé de siloxane insoluble dans l'eau présentant un poids moléculaire d'au moins ≥ 300 et ≤ 10 000 g/mole,
b) ≥ 2% en poids d'eau,
c) ≥ 0,1% en poids d'agent tensioactif,
d) ≥ 0 à 10% en poids d'additifs, choisis dans le groupe comprenant les épaississants, les agents antigel, les solvants organiques et/ou les biocides,
e) ≥ 0% en poids de siloxane(s) soluble(s) dans l'eau,
la proportion pondérale des composants susmentionnés étant choisie de manière telle que la proportion pondérale totale des composants représente au maximum 100% en poids par rapport à la formulation aqueuse de stabilisateur de mousse souple froide.

2. Formulation aqueuse de stabilisateur de mousse souple froide selon la revendication 1, **caractérisée en ce que** la formulation aqueuse de stabilisateur de mousse souple froide comprend les composants suivants
a) 0,1 à 80% en poids d'au moins un composé de siloxane insoluble dans l'eau présentant un poids moléculaire ≤ 10 000 g/mole et présentant la formule générale I suivante 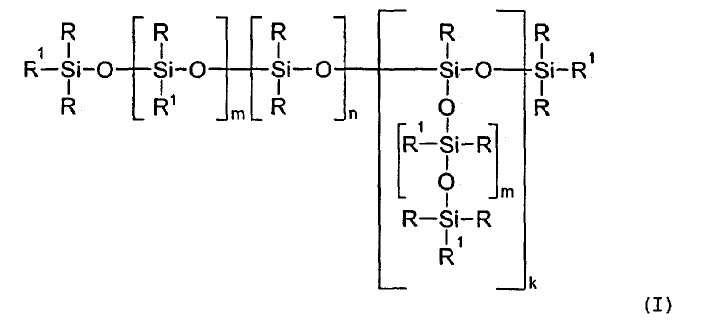 où
R représente, en étant identique ou différent l'un de l'autre, un radical hydrocarboné linéaire, ramifié, insaturé ou saturé comprenant 1 à 50 atomes de carbone,
R¹ représente R, OH, en étant identique ou différent l'un de l'autre, un radical hydrocarboné linéaire, ramifié, insaturé ou saturé comprenant 1 à 100 atomes de carbone contenant au moins un hétéroatome choisi dans le groupe formé par N, S, O, P, F, Cl, Br et/ou I,
n vaut ≥ 0 à 50,
m vaut ≥ 0 à 50,
k vaut ≥ 0 à 10,
b) 2 à 99% en poids d'eau,
c) 0,1 à 90% en poids d'agent tensioactif,
d) ≥ 0 à 10% en poids d'additifs, choisis dans le groupe comprenant les épaississants, les agents antigel, les solvants organiques et/ou les biocides,
e) ≥ 0% à 80% en poids en poids de siloxane(s) soluble(s) dans l'eau,
à condition que n + m ≥ 2 et n + m ≤ 70, la proportion pondérale des composants susmentionnés étant choisie de manière telle que la proportion pondérale totale des composants, par rapport au poids total de la formulation aqueuse de stabilisateur de mousse souple froide, représente au maximum 100% en poids.

3. Formulation aqueuse de stabilisateur de mousse souple froide selon la revendication 1 ou 2, dans laquelle
R représente, en étant identique ou différent l'un de l'autre, un radical alkyle ou aryle, de préférence méthyle, éthyle ou propyle et de préférence méthyle,
n vaut 1 à 50, de préférence 3 à 40 et de manière particulièrement préférée 5 à 25,
m vaut ≥ 1 à 20, de préférence 2 à 15 et de manière particulièrement préférée 3 à 10,
k vaut ≥ 1 à 10, de préférence 2 à 8 et de manière particulièrement préférée 3 à 6.

4. Formulation aqueuse de stabilisateur de mousse souple froide selon l'une quelconque des revendications précédentes, dans laquelle au moins un R¹ représente une chaîne latérale selon la formule II 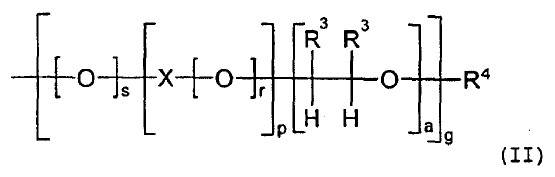 où
R³ représente, en étant identique ou différent l'un de l'autre, H, méthyle, éthyle, propyle ou phényle,
R⁴ représente, en étant identique ou différent l'un de l'autre, H, un radical alkyle, acyle, acétyle, aryle, de préférence un radical hydrocarboné monovalent ou divalent comprenant 1 à 30 atomes de carbone et de préférence un radical hydrocarboné monovalent (g = 1) ou divalent (g = 2) comprenant 1 à 30 atomes de carbone, présentant au moins un hétéroatome choisi dans le groupe formé par N, S, O, P, F, Cl, Br et/ou I,
X représente un radical hydrocarboné saturé, insaturé, ramifié, cyclique, difonctionnel, comprenant 1 à 30 atomes de carbone, qui peut également contenir des hétéroatomes tels que N ou O,
a vaut ≥ 0 à ≤ 30, de préférence 1 à 25 et préférablement 2 à 20.
g vaut 1 ou 2,
p vaut 0 ou 1,
r vaut 0 ou 1,
s vaut 0 ou 1.

5. Formulation aqueuse de stabilisateur de mousse souple froide selon l'une quelconque des revendications précédentes, dans laquelle le composé de polysiloxane insoluble dans l'eau présente la formule III suivante 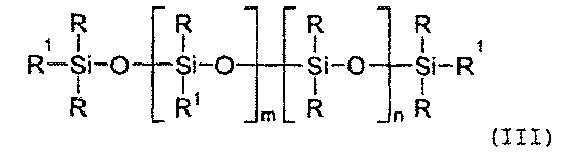 où
R représente, en étant identique ou différent l'un de l'autre, méthyle ou éthyle,
R¹ représente R, OH, en étant identique ou différent l'un de l'autre, des radicaux alkyle comprenant des groupes hydroxy, amino, chloro ou cyano, de préférence hydroxyalkyle, aminoalkyle, chloropropyle ou cyanopropyle,
n ≥ 2 à 30, de préférence 3 à 25 et de manière particulièrement préférée 4 à 25,
m vaut ≥ 0 à ≤ 5.

6. Formulation aqueuse de stabilisateur de mousse souple froide selon l'une quelconque des revendications précédentes, dans laquelle le quotient formé par la proportion massique des agents tensioactifs utilisés et la proportion massique des siloxanes insolubles dans l'eau dans la solution de stabilisateur de mousse souple froide vaut 0 < Q ≤1, en particulier Q ≤ 0,5, plus préférablement ≤ 0,2 ou même Q ≤ 0,15.

7. Formulation aqueuse de stabilisateur de mousse souple froide selon l'une quelconque des revendications précédentes, dans laquelle les polysiloxanes insolubles dans l'eau présentent un poids moléculaire de 300 à 4000 g/mole, de préférence de 350 à 3500 g/mole et de manière particulièrement préférée de 400 à 3000 g/mole.

8. Formulation aqueuse de stabilisateur de mousse souple froide selon l'une quelconque des revendications précédentes, dans laquelle le composé de polysiloxane insoluble dans l'eau présente dans la molécule au maximum 70 atomes de Si, de préférence au maximum 50, de manière particulièrement préférée 5 à 25 atomes de Si, en préférant les polydiméthylsiloxanes présentant 5 à 25 atomes de Si dans la molécule.

9. Formulation aqueuse de stabilisateur de mousse souple froide selon l'une quelconque des revendications précédentes, dans laquelle les unités polyéther présentent une masse molaire de 44 à 1000 g/mole, de préférence de 58 à 750 g/mole et de manière particulièrement préférée de 88 à 500 g/mole.

10. Formulation aqueuse de stabilisateur de mousse souple froide selon l'une quelconque des revendications précédentes, dans laquelle la formulation de stabilisateur de mousse souple froide comprend
a) ≥ 0,1 à ≤ 80% en poids, de préférence ≥ 0,2 à ≤ 60% en poids et préférablement 0,3 à ≤ 50% en poids de polysiloxane insoluble dans l'eau, un polysiloxane insoluble dans l'eau représentant 0,5 à ≤ 40% en poids étant particulièrement préféré,
b) ≥ 5 à ≤ 99% en poids, de préférence ≥ 10 à ≤ 95% en poids et préférablement ≥ 30 à ≤ 90% en poids d'eau,
c) ≥ 0,1 à ≤ 99% en poids, de préférence ≥ 0,2 à ≤ 90% en poids et préférablement ≥ 0,3 à ≤ 40% en poids d'agent tensioactif,
d) ≥ 0 à 10% en poids et de préférence 0, 1 à 5% en poids d'additifs,
e) ≥ 0 à ≤ 80% en poids, de préférence ≥ 0 à ≤ 60% en poids et préférablement 0 à ≤ 50% en poids de siloxane(s) soluble(s) dans l'eau, la proportion pondérale des composants susmentionnés étant choisie de manière telle que la proportion pondérale totale des composants, par rapport au poids total de la formulation aqueuse de stabilisateur de mousse souple froide, représente au maximum 100% en poids.

11. Formulation aqueuse de stabilisateur de mousse souple froide selon l'une quelconque des revendications précédentes, dans laquelle la formulation de stabilisateur de mousse souple froide comprend
a) ≥ 0,5 à ≤ 35% en poids, de préférence ≥ 1 à ≤ 30% en poids et préférablement 3 à ≤ 25% en poids de polysiloxane insoluble dans l'eau,
b) ≥ 5 à ≤ 99% en poids, de préférence ≥ 20 à ≤ 95% en poids et préférablement ≥ 40 à ≤ 90% en poids d'eau,
c) ≥ 0,2 à ≤ 20% en poids, de préférence ≥ 0,3 à ≤ 15% en poids et préférablement 0,5 à ≤ 10% en poids d'agent tensioactif,
d) ≥ 0 à 10% en poids et de préférence 0,1 à 5% en poids d'additifs,
e) ≥ 0 à ≤ 30% en poids, de préférence ≥ 0 à ≤ 25% en poids et préférablement 0 à ≤ 20% en poids de siloxane(s) soluble(s) dans l'eau,
la proportion pondérale des composants susmentionnés étant choisie de manière telle que la proportion pondérale totale des composants, par rapport au poids total de la formulation aqueuse de stabilisateur de mousse souple froide, représente au maximum 100% en poids.

12. Formulation aqueuse de stabilisateur de mousse souple froide selon l'une quelconque des revendications précédentes, le polydiméthylsiloxane insoluble dans l'eau, dans lequel tous les radicaux sont des radicaux méthyle et m = 0, présentant une viscosité de ≥ 0 à ≤ 100 mPa·s, de préférence de ≥ 0,5 à ≤ 80 mPa·s, préférablement ≥ 1 à ≤ 70 mPa.s et de manière particulièrement préférée de ≥ 1,5 à ≤ 50 mPa·s.

13. Formulation aqueuse de stabilisateur de mousse souple froide selon l'une quelconque des revendications précédentes, dans laquelle l'agent tensioactif soluble dans l'eau est choisi dans le groupe comprenant les agents tensioactifs anioniques, les agents tensioactifs cationiques, les agents tensioactifs non ioniques et/ou les agents tensioactifs amphotères, ≥ 90% en poids de l'agent tensioactif étant de manière particulièrement préférée un agent tensioactif non ionique soluble dans l'eau.

14. Formulation aqueuse de stabilisateur de mousse souple froide selon l'une quelconque des revendications précédentes, la formulation aqueuse de stabilisateur de mousse souple froide étant stable à l'entreposage à température ambiante et aucune séparation de phases ne se formant et/ou aucune inhomogénéité de la formulation de stabilisateur de mousse souple froide ne se produisant macroscopiquement sur un laps de temps d'au moins 10 jours, de préférence d'au moins 50 jours et préférablement d'au moins 100 jours.

15. Utilisation de la formulation aqueuse de stabilisateur de mousse souple froide selon l'une quelconque des revendications 1 à 14 pour la préparation d'une solution homogène d'activateur de mousse souple froide.

16. Solution homogène d'activateur de mousse souple froide pour destinée à être utilisée lors de la préparation de mousses souples froides de polyuréthane hautement élastiques, contenant une formation aqueuse de stabilisateur de mousse souple froide selon l'une quelconque des revendications 1 à 14 et des additifs choisis dans le groupe comprenant
- les catalyseurs, de préférence des amines, des catalyseurs métalliques,
- les agents gonflants, de préférence l'acétone, le chlorure de méthylène,
- de l'eau supplémentaire
ainsi que le cas échéant des additifs comprenant les agents ignifuges, les stabilisateurs aux UV, les colorants, les biocides, les pigments, les agents d'ouverture des pores, les réticulants, d'autres substances stabilisant la mousse et les additifs usuels.

17. Solution homogène d'activateur de mousse souple froide selon la revendication 16 destinée à une utilisation lors de la préparation de mousses souples froides de polyuréthane hautement élastiques, contenant
- ≥ 2 à ≤ 25% en poids, de préférence ≥ 3 à ≤ 20% en poids et préférablement 5 à ≤ 15% en poids de formulation aqueuse de stabilisateur de mousse souple froide,
- ≥ 1 à ≤ 20% en poids, de préférence ≥ 2 à ≤ 15% en poids et préférablement ≥ 5 à ≤ 10% en poids de catalyseur,
- ≥ 1 à ≤ 90% en poids, de préférence ≥ 10 à ≤ 80% en poids et préférablement ≥ 30 à ≤ 70% en poids d'agent gonflant,
- ≥ 1 à ≤ 90% en poids, de préférence ≥ 10 à ≤ 80% en poids et préférablement ≥ 30 à ≤ 70% en poids d'eau supplémentaire,
- ≥ 0 à ≤ 70% en poids, de préférence ≥ 2 à ≤ 60% en poids et préférablement ≥ 5 à ≤ 50% en poids d'additifs,
la proportion pondérale des composants susmentionnés étant choisie de manière telle que la proportion pondérale totale des composants représente au maximum 100% en poids par rapport à la solution aqueuse d'activateur de mousse souple froide.

18. Solution homogène d'activateur de mousse souple froide selon la revendication 16 ou 17 contenant ≥ 0,01 à ≤ 10% en poids, de préférence ≥ 0,05 à ≤ 5% en poids et préférablement ≥ 0,1 à ≤ 1% en poids de polysiloxane insoluble dans l'eau, par rapport au poids total de la solution homogène d'activateur de mousse souple froide.

19. Solution homogène d'activateur de mousse souple froide selon l'une quelconque des revendications 16 à 18, la solution homogène d'activateur de mousse souple froide étant stable à l'entreposage à température ambiante et aucune séparation de phases ne se formant et/ou aucune inhomogénéité de la solution d'activateur de mousse souple froide ne se produisant macroscopiquement sur un laps de temps d'au moins 10 jours, de préférence d'au moins 50 jours et préférablement d'au moins 100 jours.

20. Utilisation de la formulation aqueuse de stabilisateur de mousse souple froide selon l'une quelconque des revendications 1 à 14 et/ou de la solution d'activateur de mousse souple froide selon l'une quelconque des revendications 16 à 19 pour la production de mousses souples froides de polyuréthane.

21. Mousse souple froide de polyuréthane pouvant être obtenue à partir de la réaction de polyols avec des isocyanates, avec utilisation d'une formulation aqueuse de stabilisateur de mousse souple froide selon l'une quelconque des revendications 1 à 14 et/ou d'une solution homogène d'activateur de mousse souple froide selon l'une quelconque des revendications 16 à 19.

22. Objet contenant une mousse souple froide de polyuréthane hautement élastique selon la revendication 21.
